# EUROPEAN PATENT APPLICATION

(11) **EP 4 835 736 A1**
(43) Date of publication of application: **04.11.2026**
(21) Application number: 26176251.2
(22) Date of filing: 04.05.2026
(51) Int. Cl.: G06N 3/0464, G06N 3/044, G06N 3/045, G06N 3/063

(54) **TIME STEPPED MACHINE LEARNING MODEL**

(30) Priority: 02.05.2025 US 202563799071 P; 27.04.2026 US 202619659249
(71) Applicant: Medtronic, Inc., Minneapolis, Minnesota 55432 (US)
(72) Inventor: Hageman, Kristin N., Minneapolis, 55432 (US); Nedrud, Joshua J., Minneapolis, 55432 (US); Anderson, Joel A., Minneapolis, 55432 (US); Brink, Thaddeus S., Minneapolis, 55432 (US); Tracton, Philip E., Minneapolis, 55432 (US)
(74) Representative: Zimmermann & Partner Patentanwälte mbB

(57) **Abstract**

An example system includes a memory configured to store a machine learning (ML) model comprising a hidden layer and a top layer; and processing circuitry configured to receive a physiological signal comprising a first portion and a second portion, the second portion occurring after the first portion of the physiological signal; apply the first portion of the physiological signal to the ML model to generate a plurality of hidden layer kernels and a plurality of top layer kernels; store a portion of the plurality of hidden layer kernels in the memory; store the plurality of top layer kernels in the memory; and apply the second portion of the physiological signal, the stored plurality of top layer kernels, and the stored portion of the plurality of hidden layer kernels to the ML model to generate an output with respect to at least the second portion of the physiological signal.

## Description

### CROSS-REFERENCE TO RELATED APPLICATION

This application claims the benefit of and priority to U.S. Provisional Patent Application No. 63/799,071 filed May 2, 2025 and Patent Application No. 19/659,249 filed April 27, 2026, the entire disclosure of which is incorporated by reference herein.

### TECHNICAL FIELD

The disclosure relates generally to medical device systems and, more particularly, medical device systems configured to detect physiological signals.

### BACKGROUND

Medical devices may be used to monitor physiological signals of a patient. For example, some medical devices are configured to sense cardiac electrogram (EGM) signals indicative of the electrical activity of the heart via electrodes, electroencephalogram (EEG) signals indicative of the electrical activity of the heart via electrodes, and/or an evoked compound action potential (ECAP). Some medical devices may be configured to deliver a therapy in conjunction with or separate from the monitoring of physiological signals.

### SUMMARY

A medical device, such as an implantable medical device (IMD), may be configured to sense one or more physiological signals of a patent. Example physiological signals may include at least one of an electroencephalogram (EEG) signal, electrocardiogram (ECG) signal, respiration, blood pressure, activity level, electromyography (EMG) signal, evoked potential, evoked compound action potential (ECAP), intrinsic nerve activity, and/or electrophysiology (EP). These signals may be sensed using one or more sensors, such as one or more comprise electrodes, accelerometers, or any other known sensors.

In accordance with techniques described herein, a medical device, such as an IMD, may apply sensed physiological signal(s) (e.g., a continuously sensed signal or a number of sensed signals at discrete times over a period of time) to a time-stepped machine learning (ML) model. The time-stepped ML model may be a convolutional neural network in some examples, and the time-stepped ML model may store a portion of hidden layer kernels in a memory of IMD to be used for new convolutional steps when newly sensed portions of the physiological signal are applied to the ML model. In this manner, the time-stepped ML model may be configured to generate output for the ML model using previously stored kernels (or other information) that can save computational resources and/or improve efficiency of the ML model.

In one example, this disclosure describes a system comprising: a memory configured to store a machine learning (ML) model comprising a hidden layer and a top layer; and processing circuitry configured to: receive a physiological signal comprising a first portion and a second portion, the second portion of the physiological signal occurring after the first portion of the physiological signal; apply the first portion of the physiological signal to the ML model to generate a plurality of hidden layer kernels and a plurality of top layer kernels; store a portion of the plurality of hidden layer kernels in the memory; store the plurality of top layer kernels in the memory; and apply the second portion of the physiological signal, the stored plurality of top layer kernels, and the stored portion of the plurality of hidden layer kernels to the ML model to generate an output with respect to at least the second portion of the physiological signal.

In another example, this disclosure describes a method comprising: receiving, by processing circuitry, a physiological signal from an implantable medical device (IMD), the physiological signal comprising a first portion and a second portion, the second portion of the physiological signal occurring after the first portion of the physiological signal; applying, by the processing circuitry, the first portion of the physiological signal to a machine learning (ML) model to generate a plurality of hidden layer kernels and a plurality of top layer kernels, the ML model comprising a hidden layer and a top layer; storing, by the processing circuitry, a portion of the plurality of hidden layer kernels in a memory; storing, by the processing circuitry, the plurality of top layer kernels in the memory; and applying, by the processing circuitry, the second portion of the physiological signal, the stored plurality of top layer kernels, and the stored portion of the plurality of hidden layer kernels to the ML model to generate an output with respect to at least the second portion of the physiological signal.

The summary is intended to provide an overview of the subject matter described in this disclosure. It is not intended to provide an exclusive or exhaustive explanation of the systems, device, and methods described in detail within the accompanying drawings and description below. Further details of one or more examples of this disclosure are set forth in the accompanying drawings and in the description below. Other features, objects, and advantages will be apparent from the description and drawings, and from the claims.

### BRIEF DESCRIPTION OF THE DRAWINGS

FIG. 1A illustrates the environment of an example medical system in conjunction with a patient, in accordance with one or more techniques disclosed herein.
FIG. 1B illustrates the environment of an example medical system in conjunction with a patient, in accordance with one or more techniques disclosed herein.
FIG. 2 is a functional block diagram illustrating an example configuration of the implantable medical device (IMD) of the medical system of FIG. 1A or FIG. 1B in accordance with one or more techniques disclosed herein.
FIGS. 3A-3C are conceptual diagrams illustrating example machine learning models, in accordance with one or more techniques disclosed herein.
FIGS. 4A-4C are conceptual diagrams illustrating example attention heads of a machine learning model, in accordance with one or more techniques disclosed herein.
FIG. 5 is a functional block diagram illustrating an example configuration of the external device of FIGS. 1A-1B, in accordance with one or more techniques disclosed herein.
FIG. 6 is a block diagram illustrating an example system that includes an access point, a network, external computing devices, such as a server, and one or more other computing devices, which may be coupled to the IMD and external device of FIGS. 1-5, in accordance with one or more techniques disclosed herein.
FIG. 7 is a flow diagram illustrating an example technique for applying a physiological signal to a machine learning model to generate an output, in accordance with one or more techniques disclosed herein.
FIG. 8 is a flow diagram illustrating an example technique for applying a physiological signal to a machine learning model to generate an output, in accordance with one or more techniques disclosed herein.
FIG. 9 is a flow diagram illustrating an example technique for replacing data elements in an attention head of a machine learning model, in accordance with one or more techniques disclosed herein.

Like reference characters denote like elements throughout the description and figures.

### DETAILED DESCRIPTION

A variety of types of implantable medical devices (IMDs) sense physiological signals that include physiological data, such as cardiac EGMs, EEGs, or ECAPs. In some examples, EGMs may also include electrocardiogram (ECGs or EKGs). In some examples, electrodes used by IMDs to sense physiological signals are typically integrated with a housing of the IMD and/or coupled to the IMD via one or more elongated leads. Example IMDs that monitor physiological data and/or provide therapy include spinal cord stimulators, deep brain stimulation devices, and pacemakers and implantable cardioverter-defibrillators. These devices may be coupled to intravascular and/or extravascular leads, as well as include with housings configured for implantation within the heart or other anatomical location that are leadless (e.g., carry electrodes on the housing). An example of pacemaker configured for intracardiac implantation is the Micra^{™} Transcatheter Pacing System, available from Medtronic plc. Some IMDs that do not provide therapy, e.g., implantable patient monitors, sense cardiac EGMs. Examples of such an IMD are the Reveal LINQ^{™} and LINQ II^{™} Insertable Cardiac Monitors, available from Medtronic plc, which may be inserted subcutaneously. Such IMDs may facilitate relatively longer-term monitoring of patients during normal daily activities and may periodically transmit collected data to a network service, such as the Medtronic Carelink^{™} Network.

In some examples, an IMD attempting to sense a particular signal may also sense, or determine, an amount of noise. On some occasions, the amount of noise included in the sensed signal may make the desired sensed signal, such as an ECAP, EEG signal, or ECG signal, more difficult to identify in a signal sensed by the IMD. In some examples, an IMD may input one or more of the sensed physiological signals into a machine learning (ML) model to into a ML model to generate an output, as a determination and/or prediction one or more physiological parameters, diagnostic parameters, and/or therapeutic parameters.

An IMD may have limited battery and/or limited memory size for an IMD to be small enough to be effectively implantable in a patient. The power and/or memory needs for running ML models are often high, which may be problematic for an IMD to run one or more ML models due to the limited battery and/or the limited memory size of an IMD.

In accordance with techniques described herein, a medical device, such as an IMD, may apply sensed physiological signal(s) (e.g., a continuously sensed signal or a number of sensed signals at discrete times over a period of time) to a ML model. The ML model may store a particular portion of hidden layer kernels in a memory of IMD to be used for new convolutional steps when newly sensed portions of the physiological signal are applied to the ML model. In this manner, the ML model may be configured to generate output for the ML model using previously stored kernels (or other information) to generate an output that can save computational resources and/or improve efficiency of the ML model.

In some examples, an IMD being able to generate output of a ML model based on applying a newly seen/sensed portion of a physiological signal, stored portions of hidden layer kernels, and stored top layer kernels may improve efficiency of computer resources of the IMD. Computer resources of the IMD may include battery power or memory.

An IMD may be repeatedly performing such continuous measurements of physiological signals over long periods of time (e.g., days, months, or years). A ML model configured to more efficiently use computer resources of the IMD may enable an IMD to have a longer implantable life and/or may enable greater use of a ML model in an IMD. An IMD being able to run a more efficient ML model more often may enable more accurate health event detections and/or predictions, which may enable improved patient diagnostics and/or improved patient treatment.

Any medical device configured to sense physiological data via implanted electrodes or sensors, including the examples identified herein, may implement the techniques of this disclosure for applying a physiological signal to a ML model to generate an output based on the physiological signal.

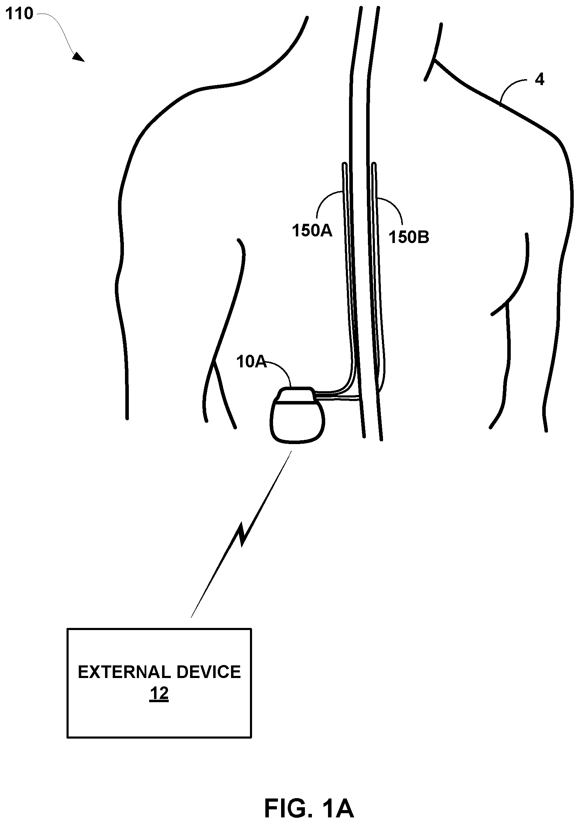

FIG. 1A illustrates a conceptual diagram illustrating an example system 110 that includes another example of an IMD 10A that is configured to deliver spinal cord stimulation (SCS) therapy and an external device 12, in accordance with one or more techniques of this disclosure.

Although the techniques described in this disclosure are generally applicable to a variety of IMDs, application of such techniques to IMDs and, more particularly, an ICM or implantable electrical stimulators (e.g., neurostimulators) will be described for purposes of illustration. More particularly, the disclosure will refer to an IMD 10A system or implantable SCS system for purposes of illustration, but without limitation as to other types of medical devices or other therapeutic applications of medical devices.

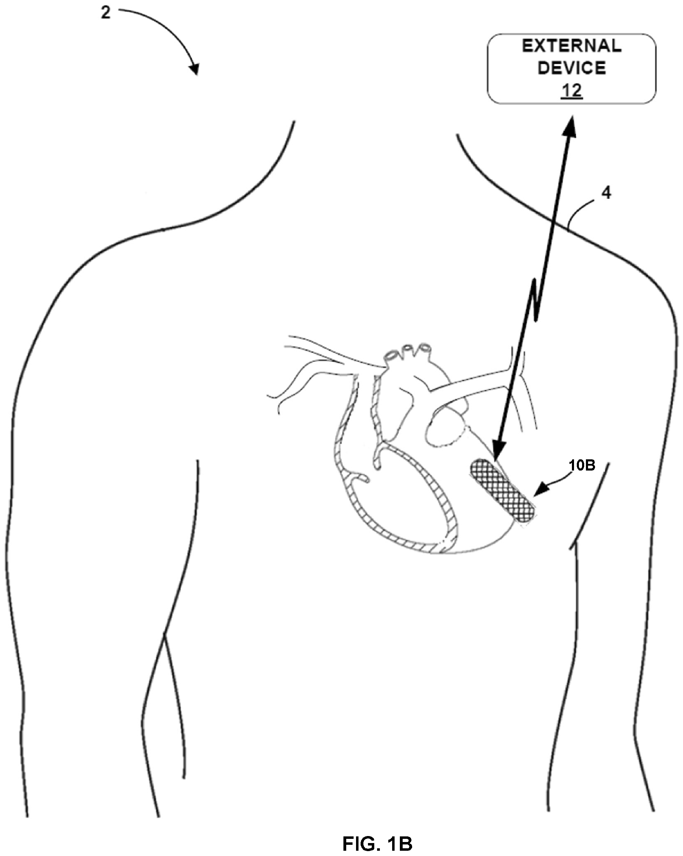

As shown in FIG. 1A, system 110 includes an IMD 10A, leads 150A and 150B, and external programmer 150 shown in conjunction with a patient 4, who is ordinarily a human patient. In the example of FIG. 1, IMD 10A is an implantable electrical stimulator that is configured to generate and deliver electrical stimulation therapy to patient 4 via one or more electrodes of electrodes of leads 150A and/or 150B (collectively, "leads 150"), e.g., for relief of chronic pain or other symptoms. In other examples, IMD 10A may be coupled to a single lead carrying multiple electrodes or more than two leads each carrying multiple electrodes. In some examples, the stimulation signals, or pulses, may be configured to elicit detectable ECAP signals that are sensed by IMD 10A. In some examples, IMD 10A may use sensed ECAP signals to determine a posture state occupied by patient 4 and/or determine how to adjust one or more parameters that define stimulation therapy. In this manner, IMD 10A may sense one or more physiological signals and use one or more characteristics of those signals as feedback for closed-loop control of the electrical stimulation that is delivered. IMD 10A may be a chronic electrical stimulator that remains implanted within patient 4 for weeks, months, or even years. In other examples, IMD 10A may be a temporary, or trial, stimulator used to screen or evaluate the efficacy of electrical stimulation for chronic therapy. In one example, IMD 10A is implanted within patient 4, while in another example, IMD 10A is an external device coupled to percutaneously implanted leads. In some examples, IMD 10A uses one or more leads, while in other examples, IMD 10A is leadless.

FIG. 1B illustrates the environment of another example medical system 2 in conjunction with a patient 4, in accordance with one or more techniques of this disclosure. The example techniques may be used with an IMD 10B, which may be in wireless communication with at least one of external device 12 and other devices not pictured in FIG. 1. In some examples, IMD 10B is implanted outside of a thoracic cavity of patient 4 (e.g., subcutaneously in the pectoral location illustrated in FIG. 1). IMD 10B may be positioned near the sternum near or just below the level of the heart of patient 4, e.g., at least partially within the cardiac silhouette. IMD 10B includes a plurality of electrodes (not shown in FIG. 1) and is configured to sense a cardiac EGM via the plurality of electrodes. In some examples, IMD 10A takes the form of the Reveal LINQ^{™} or LINQ II^{™} ICM, or another ICM similar to, e.g., a version or modification of, the Reveal LINQ^{™} or LINQ II^{™} ICMs.

External device 12 may be a computing device with a display viewable by the user and an interface for providing input to external device 12 (i.e., a user input mechanism). In some examples, external device 12 may be a notebook computer, tablet computer, workstation, one or more servers, cellular phone, personal digital assistant, or another computing device that may run an application that enables the computing device to interact with IMD 10A or IMD 10B. External device 12 is configured to communicate with IMD 10A or IMD 10B and, optionally, another computing device (not illustrated in FIG. 1), via wireless communication. External device 12, for example, may communicate via near-field communication technologies (e.g., inductive coupling, NFC or other communication technologies operable at ranges less than 10-20 cm) and far-field communication technologies (e.g., RF telemetry according to the 802.11 or Bluetooth^{®} specification sets, or other communication technologies operable at ranges greater than near-field communication technologies).

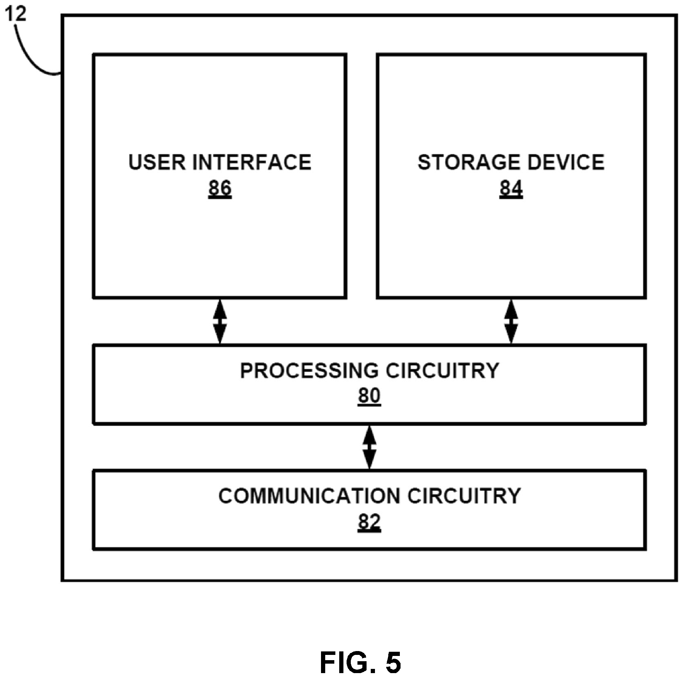

External device 12 may be used to configure operational parameters for IMD 10A or IMD 10B. External device 12 may be used to retrieve data from IMD 10A or IMD 10B. The retrieved data may include values of physiological parameters measured by IMD 10A or IMD 10B, indications of patient health episodes or other maladies detected by IMD 10A or IMD 10B, and physiological signals recorded by IMD 10A or IMD 10B. For example, external device 12 may retrieve physiological data recorded by IMD 10A or IMD 10B. As discussed in greater detail below with respect to FIG. 5, one or more remote computing devices may interact with IMD 10A or 10B in a manner similar to external device 12, e.g., to program IMD 10A or 10B and/or retrieve data from IMD 10A or 10B, via a network.

Processing circuitry of medical system 2, e.g., of IMD 10A, IMD 10B, external device 12, and/or of one or more other computing devices, may be configured to perform the example techniques of this disclosure for determining which sets of layers of a ML model to deactivate or activate to analyze sensed data.

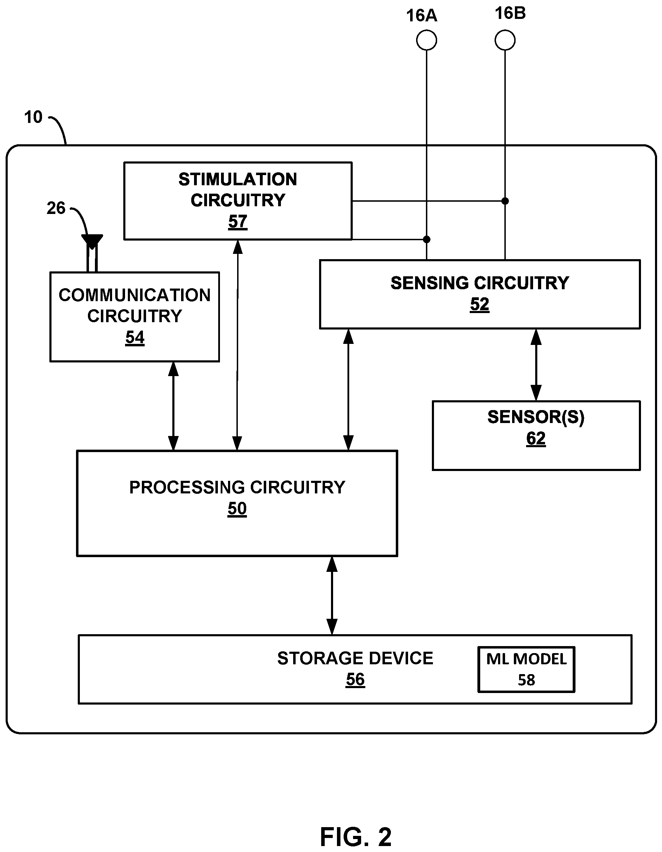

FIG. 2 is a functional block diagram illustrating an example configuration of IMD 10, which is example of IMD 10A of FIG. 1A or IMD 10B of FIG. 1B in accordance with one or more techniques described herein. In the illustrated example, IMD 10 includes electrodes 16A and 16B (collectively "electrodes 16"), antenna 26, processing circuitry 50, sensing circuitry 52, communication circuitry 54, storage device 56, stimulation circuitry 57, and sensors 62. Although the illustrated example includes two electrodes 16, IMDs including or coupled to more than two electrodes 16 may implement the techniques of this disclosure in some examples. However, IMD 10 does not need to include all these components in some examples, or IMD 10 may include additional components in some examples. For example, IMD 10 may not include stimulation circuitry 57, in some examples.

Processing circuitry 50 may include fixed function circuitry and/or programmable processing circuitry. Processing circuitry 50 may include any one or more of a microprocessor, a controller, a digital signal processor (DSP), an application specific integrated circuit (ASIC), a field-programmable gate array (FPGA), or equivalent discrete or analog logic circuitry. In some examples, processing circuitry 50 may include multiple components, such as any combination of one or more microprocessors, one or more controllers, one or more DSPs, one or more ASICs, or one or more FPGAs, as well as other discrete or integrated logic circuitry. The functions attributed to processing circuitry 50 herein may be embodied as software, firmware, hardware or any combination thereof.

Sensing circuitry 52 may sense signals from electrodes 16 or sensors 62, e.g., to produce a cardiac EGM, EEG signal, optical signal ECAP signal, or other signal in order to facilitate monitoring one or more particular physiological signals of the patient. Stimulation circuitry 57 may be coupled to electrodes 16 and configured to cause electrical stimulation therapy to be delivered to patient 4 via one or more electrodes 16. Sensing circuitry 52 also may monitor signals from sensors 62, which may include one or more accelerometers, pressure sensors, and/or optical sensors, as examples. In some examples, electrodes 16 may be referred to as sensors, such as when being used to detect a physiological signal, such as a cardiac EGM signal or EEG signal. In some examples, sensing circuitry 52 may include one or more filters and amplifiers for filtering and amplifying signals received from electrodes 16 and/or sensors 62.

Sensing circuitry 52 may also provide one or more digitized physiological signals to processing circuitry 50 for analysis, e.g., to apply sensed physiological signal to a ML model 58 to generate an output with respect to the sensed physiological signal 130, such as a determination a physiological parameter and/or health condition of the patient according to the techniques of this disclosure. In some examples, processing circuitry 50 may store the digitized physiological signals in storage device 56.

Communication circuitry 54 may include any suitable hardware, firmware, software or any combination thereof for communicating with another device, such as external device 12, another networked computing device, or another IMD or sensor. Under the control of processing circuitry 50, communication circuitry 54 may receive downlink telemetry from, as well as send uplink telemetry to external device 12 or another device with the aid of an internal or external antenna, e.g., antenna 26. In addition, processing circuitry 50 may communicate with a networked computing device via an external device (e.g., external device 12) and a computer network, such as the Medtronic CareLink^{®} Network. Antenna 26 and communication circuitry 54 may be configured to transmit and/or receive signals via inductive coupling, electromagnetic coupling, Near Field Communication (NFC), Radio Frequency (RF) communication, Bluetooth, WiFi, or other proprietary or non-proprietary wireless communication schemes.

In some examples, storage device 56 includes computer-readable instructions that, when executed by processing circuitry 50, cause IMD 10 and processing circuitry 50 to perform various functions attributed to IMD 10 and processing circuitry 50 herein. Storage device 56 may include any volatile, non-volatile, magnetic, optical, or electrical media, such as a random access memory (RAM), read-only memory (ROM), non-volatile RAM (NVRAM), electrically-erasable programmable ROM (EEPROM), flash memory, or any other digital media. In some examples, storage device 56 may be referred to as a memory. Storage device 56 may store one or more ML models 58, such as described herein. Storage device 56 may store, as examples, programmed values for one or more operational parameters of IMD 10 and/or data collected by IMD 10 for transmission to another device using communication circuitry 54. Data stored by storage device 56 and transmitted by communication circuitry 54 to one or more other devices may include digitized physiological signals, such as digitized cardiac EGMs or digitized EEGs, as examples. In some examples, storage device 56 may refer to some or all of memory located on IMD 10, including memory used by ML model 58.

In some examples, stimulation circuitry 57 is configured to generate and deliver electrical therapy to the patient. Stimulation circuitry 57 may include one or more pulse generators, capacitors, and/or other components capable of generating and/or storing energy to deliver as electrical stimulation therapy.

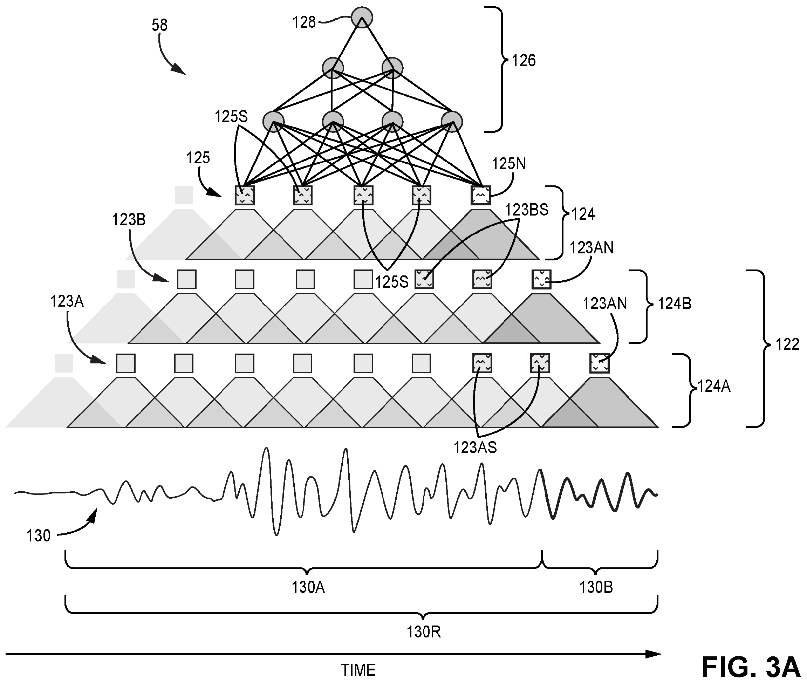

FIGS. 3A-3B are conceptual diagrams illustrating an example ML
model 58 configured to generate an output 128 based applying a physiological signal 130 to ML model 58. In some examples, physiological signal 130 may be an ECG signal, an EGM signal, an EEG signal, an EMG signal, or other physiological signal. In some examples, physiological signal 130 may be a raw sensed signal. In some examples, physiological signal 130 may be a preprocessed signal based on a raw sensed signal. In some examples, processing circuitry 50 may be configured to apply physiological signal 130 to ML model 58 to generate an output, such as a health condition status or prediction of the patient 4 or a determination of one or more features of the physiological signal 130 that may be indicative of a health condition status or prediction.

In some examples, ML model 58 is an example of a is an example of a convolutional neural network (CNN) model, a deep learning model, or deep learning algorithm, trained to determine a physiological parameter and/or health condition based on physiological data of a sensed physiological signal 130 or determine one or more particular features of the physiological signal 130. One or more of IMD 10, external device 12, server 94, and/or computing device(s) 100 may train, store, and/or utilize ML model 58, but other devices may apply inputs associated with a particular patient to ML model 58 in other examples. As discussed above, other types of machine learning and deep learning models or algorithms may be utilized in other examples. For examples, a convolutional neural network model of ResNet-18 may be used. Some non-limiting examples of models that may be used for transfer learning include AlexNet, VGGNet, GoogleNet, ResNet50, or DenseNet, etc. Some non-limiting examples of machine learning techniques include Support Vector Machines, K-Nearest Neighbor algorithm, and Multi-layer Perceptron.

Although the techniques for applying a physiological signal 130 to ML model 58 to generate an output is described as being performed by processing circuitry 50 of IMD 10, such techniques may be performed, in whole or part, by processing circuitry of any one or more devices of system 2, such as processing circuitry 80 of external device 12, processing circuitry 98 of server 94, or processing circuitry of one or more computing devices 100.

As shown in the examples of FIGS. 3A-3B, ML model 58 may include hidden layers 122 that include a hidden layer 122A and a second hidden layer 122B (or more hidden layers), a top layer 124 and a connected head 126. In some examples, a connected head 126 may be head network comprising a set of fully connected (e.g., dense) layers or a transformer network. In some examples, a second hidden layer 122B may be above the first hidden layer 122A (e.g., the output for the first hidden layer 122A is the input to the second hidden layer 122B) with respect to the physiological signal 130 being input. In some examples, the second hidden layer 122B is directly above the first hidden layer 122A. In some examples, the top layer 124 is directly above the final hidden layer (e.g., second hidden layer 122B in FIG. 3A). In some examples, at least a portion of physiological signal 130 may be input to first hidden layer 122A. While FIGS. 3A-3B show two hidden layers 122A, 122B, ML model 58 may have only one hidden layer or more than two hidden layers 122 in other examples. In some examples, top layer 124 is directly connected to the connected head 126 and the top layer kernels 125 output by top layer 124 are used as the input to the connected head 126.

In some examples, physiological signal 130 may comprise a first portion 130A of the physiological signal and a second portion 130B of the physiological signal. In some examples, the second portion 130B of the physiological signal may occur after, with respect to time, the first portion 130A of the physiological signal (e.g., the second portion 130B occurs later in time than the first portion 130A). In some examples, the second portion 130B of the physiological signal may occur immediately after, with respect to time, the first portion 130A of the physiological signal. In some examples, a duration of the first portion 130A may be at least two times greater than a duration of the second portion 130B. In some examples, a duration of the first portion 130A may be at least three times greater than a duration of the second portion 130B. In some examples, a receptive field 130R of the physiological signal may comprise the first portion 130A and second portion 130B. In some examples, a duration of the second portion 130B may be based on a kernel size of the first layer 122A. In some examples, a duration of the receptive field 130R of the physiological signal may be based on a duration of the particular physiological signal, such as an EEG or ECG signal, needed by ML model 58 to generate an accurate output based on the physiological signal 130. For example, ML model 58 may generate an output based on a physiological signal 130 having a duration of the receptive field 130R.

In some examples, processing circuitry 50 may apply first portion 130A of the physiological signal to the ML model 58. For examples, processing circuitry 50 may apply first portion 130A of the physiological signal to the first hidden layer 122A to generate a plurality of first hidden layer kernels 123A. In some examples, processing circuitry 50 may apply a plurality of first hidden layer kernels 123A to second hidden layer 122B to generate a plurality of second hidden layer kernels 123B. In some examples, processing circuitry 50 may apply a plurality of second hidden layer kernels 123B to top layer 124 to generate a plurality of top layer kernels 125. In some examples, processing circuitry 50 may apply a plurality of top layer kernels 125 to connected head 126 to generate an output 128.

In some examples, when applying a continuously sensed signal to a ML model, a duration of the sensed signal may need to be a duration of a receptive field 130R for the ML model to have enough signal data to make determinations based on the applied physiological signal 130. For example, a receptive signal may be a cardiac cycle of an ECG signal or a particular duration of an EEG signal. In other examples, the signal may be an ECAP signal, local field potential signal, or other sensed physiological signals. When applying a receptive field 130R physiological signal to a ML model 58, if the full receptive field 130R signal is applied to the layers of the ML model 58 to generate a full set of kernels at each layer, a significant amount of computing resources, such as memory and/or power, is required to run the ML model 58.

In accordance with techniques described in, ML model 58 may be configured to store kernels, such as 123AS, 123BS, and/or 125S, and use the stored kernels in applying newly sensed physiological signal 130 (e.g., second portion 130B) to generate an output 128. In some examples, by storing particular kernels and using the stored kernels, ML model 58 may be able to generate an output 128, ML model 58 may use less computational resources, such as battery power and/or memory, to generate an output 128 based on a receptive field 130R of physiological signal.

In some examples, physiological signal 130 may comprise a first portion 130A and a second portion 130B. In some examples, a combination of the first portion 130A and the second 130B may correspond to the receptive field 130R of the physiological signal 130. In some examples, processing circuitry 50 may apply a first portion 130A of the physiological signal to ML model 58. For example, processing circuitry 50 may apply a first portion 130A of the physiological signal to first hidden layer 122A to generate a plurality of first hidden layer kernels 123A (e.g., each of kernels 123A except 123AN). In some examples, processing circuitry 50 may be configured to store a portion of first hidden layer kernels 123A, such as kernels 123AS, in a memory, such as storage device 56. In some examples, an amount of the stored portion of the first hidden layer kernels 123AS may be based on a kernel input size of the ML model 58 and/or kernel input size for the second hidden layer 122B. For example, as shown in FIG. 3A, a kernel input size for the second hidden layer 122B is three. However, a kernel input size for layers of the ML model 58 may be more than three or may be less than three. In some examples, an amount of the stored portion of the plurality of the first hidden layer kernels 123AS may be a kernel input size (e.g., three as shown in FIG. 3A) of the second hidden layer 122B minus a stride (e.g., one as shown in FIG. 3A) of the second hidden layer 122B (e.g., two stored first hidden layer kernels 123AS). For example, if a kernel input size of the second hidden layer 122B is five and a stride of the second hidden layer 122B is two, the amount of the stored hidden layer kernels 123AS would be three.

In some examples, processing circuitry 50 may be configured to apply the plurality of first hidden layer kernels 123A (e.g., each of kernels 123A except 123AN) to second hidden layer 122B to generate a plurality of second hidden layer kernels 123B (e.g., each of kernels 123B except 123BN). In some examples, processing circuitry 50 may be configured to store a portion of second hidden layer kernels 123B, such as kernels 123BS, in a memory, such as storage device 56. In some examples, an amount of the stored portion of the second hidden layer kernels 123BS may be based on a kernel input size of the ML model 58 and/or kernel input size for the top layer 124. For example, as shown in FIG. 3A, a kernel input size for the top layer 124 is three. However, a kernel input size for layers of the ML model 58, such as the top layer 124, may be more than three or may be less than three. In some examples, an amount of the stored portion of the plurality of the second hidden layer kernels 123BS may be a kernel input size (e.g., three as shown in FIG. 3A) of the top layer 124 minus a stride (e.g., one as shown in FIG. 3A) of the top hidden layer 124 (e.g., two stored first hidden layer kernels 123BS).

In some examples, processing circuitry 50 may be configured to apply the plurality of second hidden layer kernels 123B (e.g., each of kernels 123B except 123BN) to top layer 124 to generate a plurality of top layer kernels 125 (e.g., each of kernels 125 except 125N). In some examples, processing circuitry 50 may be configured to store the plurality of generated top layer kernels 125S in a memory, such as storage device 56.

In some examples, processing circuitry 50 may apply the second portion 130B of the physiological signal to the ML model 58. In some examples, in response to IMD sensing a second portion 130B of physiological signal 130, such as second portion 130B of a receptive field 130R of physiological signal, processing circuitry 50 may apply the second portion 130B of the physiological signal to the ML model 58. For example, processing circuitry 50 may apply the second portion 130B of the physiological signal to generate first hidden layer kernel 123AN. In some examples, processing circuitry 50 may apply the generated first hidden layer kernel 123AN and stored first hidden layer kernels 123AS to second hidden layer 122B to generate second hidden layer kernel 123BN. In some examples, processing circuitry 50 may apply stored second hidden layer kernels 123BS and generated second hidden layer kernel 123BN to top layer 124 to generate top layer kernel 125N. In some examples, processing circuitry 50 may apply stored top layer kernels 125S and generated top layer kernel 125N to connected head 126 to generate an output 128.

In some examples, processing circuitry 50 being able to generate an output 128 representative of a respective field 130R of a sensed physiological signal based on applying the second portion 130B of the physiological signal, the stored portions of the hidden layer kernels (e.g., kernels 123AS and 123BS), and the stored top layer kernels (e.g., kernels 125AS) to respective portions of the ML model 58, IMD 10 may be able to improve efficiency of computer resources of IMD 10, such as battery or memory, that are used to apply a continuously sensed physiological signal 130 to ML model 58 to generate an output 128. For example, in accordance with techniques described herein, the kernels at one or more layers, such as 123A, 123B, 125, may not need to be generated for an entire respective field 130R when a new portion of physiological signal 130 is sensed, such as 130B. By storing particular kernels at particular levels and generating a kernel 123AN based on the newly sensed portion of the physiological signal, such as second portion 130B, and then applying the stored kernels, such as kernels 123AS, and the newly generated kernel 123AN to a second hidden layer, such as 122B, to generate a kernel 123BN, processing circuitry 50 is able to generate an accurate output 128 based on a respective field 130R of the physiological signal while limiting an amount physiological signal is applied to the ML model and limiting an amount of kernels are generated to generate the output. In some examples, such as when an IMD 10 is continuously sensing a physiological signal over a period of time (e.g., 10 seconds, 30 seconds, 1 minute, 5 minutes, 30 minutes, 1 hours, multiple hours, etc.), and/or is repeatedly performing such continuous measurements over days, months, or years, a ML model 58 configured to efficiently use computer resources, such as described herein, may enable an IMD 10 with a longer implantable life and/or may enable greater use of a ML model in an IMD, which may enable more accurate health event detections and/or predictions, which may enable improved patient diagnostics and/or improved patient treatment.

In some examples, when a ML model 58 requires three kernels (e.g., kernels 123AS and kernel 123AN) to be applied to a layer, such as second hidden layer 122B, to generate kernel 123BN that is representative of the second portion 130B of the physiological signal, by storing kernels 123AS, processing circuitry 50 may be able generate second layer kernel 123BN storing the plurality of top layer kernels 125S that correspond to the first portion 130A of the physiological signal.

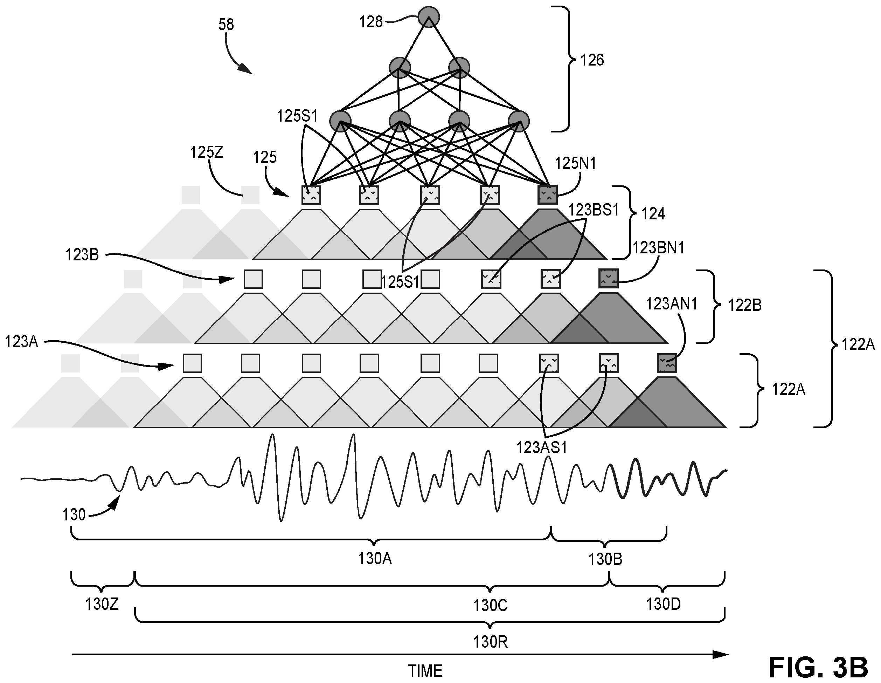

FIG. 3B illustrates an example of ML model 58 in which the physiological signal 130 is sensed for an additional period of time Ta. ML model 58 in FIG. 3B operates similarly as ML model 58 in FIG. 3A, but the respective portions of physiological signal 130 and respective stored and/or generated kernels are updated based on the newly sensed duration of time Ta of the physiological signal 130 by IMD 10. In response to the physiological signal being sensed for an additional period time Ta, portion 130C of physiological signal 130 replaces portion 130A of physiological signal as the first portion of the physiological signal. Second portion 130D of physiological signal 130 replaces portion 130B of the physiological signal 130. In some examples, portion 130Z of physiological signal 130, which was a part of portion 130A, is removed from the new first portion 130C of the physiological signal because portion 130A is no longer within the receptive field 130R. In some examples, a duration of portion 130Z of physiological signal 130 corresponds to a duration of period of time Ta which corresponds to a duration of the newly sensed portion of the physiological signal 130. In this manner, processing circuitry 50 can continuously update ML model 58 with the updated kernels based on more recent sensed signals and then apply the updated kernels with a newly sensed signal to the ML model 58 for further analysis and additional output 128 based on the newly sensed signals.

In some examples, processing circuitry 50 may be configured to store a portion of first hidden layer kernels 123A, such as kernels 123AS1, in a memory, such as storage device 56. In some examples, an amount of the stored portion of the first hidden layer kernels 123AS may be based on a kernel input size of the ML model 58 and/or kernel input size for the second hidden layer 122B. For example, as shown in FIG. 3B, a kernel input size for the second hidden layer 122B is three. However, a kernel input size for layers of the ML model 58 may be more than three or may be less than three. In some examples, an amount of the stored portion of the plurality of the first hidden layer kernels 123AS may be a kernel input size (e.g., three as shown in FIG. 3A) of the second hidden layer 122B minus a stride (e.g., one as shown in FIG. 3A) of the second hidden layer 12B (e.g., two stored first hidden layer kernels 123AS).

In some examples, processing circuitry 50 may apply the second portion 130D of the physiological signal to the ML model 58. In some examples, in response to IMD 10 sensing an additional duration of time of physiological signal 130, such as time Ta, processing circuitry 50 may apply the second portion 130D of the physiological signal to the ML model 58. For example, processing circuitry 50 may apply the second portion 130D of the physiological signal to generate first hidden layer kernel 123AN1. In some examples, processing circuitry 50 may store first hidden layer kernel 123AN in memory and remove a kernel of the stored first hidden layer kernels 123AS (e.g., first hidden layer kernel 123AN replaces one of the stored first hidden layer kernels 123AS, such an oldest kernel). For example, processing circuitry 50 may update the stored first hidden layer kernels 123AS, as shown in FIG. 3A, to stored first hidden layer kernels 123AS1 which includes kernel 123AN.

In some examples, processing circuitry 50 may apply the generated first hidden layer kernel 123AN1 and stored first hidden layer kernels 123AS1 to second hidden layer 122B to generate second hidden layer kernel 123BN1. In some examples, processing circuitry 50 may store second hidden layer kernel 123BN in memory and remove a kernel of the stored second hidden layer kernels 123BS (e.g., second hidden layer kernel 123BN replaces one of the stored second hidden layer kernels 123BS, such an oldest kernel). For example, processing circuitry 50 may update the stored second hidden layer kernels 123BS, as shown in FIG. 3A, to stored second hidden layer kernels 123BS1 which includes kernel 123BN.

In some examples, processing circuitry 50 may apply stored second hidden layer kernels 123BS1 and generated second hidden layer kernel 123BN1 to top layer 124 to generate top layer kernel 125N1. In some examples, processing circuitry 50 may store second hidden layer kernel 125N in memory and remove a kernel of the stored top layer kernels 125S (e.g., top layer kernel 125N replaces one of the stored top layer kernels 125S, such as an oldest saved kernel, such as kernel 125Z). For example, processing circuitry 50 may update the stored top layer kernels 125S, as shown in FIG. 3A, and included kernel 125Z to stored top layer kernels 125S1 which includes kernel 125N and does not include kernel 125Z.

In some examples, processing circuitry 50 may apply stored top layer kernels 125S1 and generated top layer kernel 125N1 to connected head 126 to generate an output 128. In some examples, processing circuitry 50 may similarly apply a physiological signal to ML model 58 as the physiological signal is continuously sensed over a period of time which may improve efficiency of using computer resources of IMD 10 to apply a continuously sensed physiological signal 130 over a period of time to a ML model 58 to generate an output with respect to the physiological signal 130, which may enable an IMD 10 with a longer implantable life and/or may enable greater use of a ML model in an IMD, which may enable more accurate health event detections and/or predictions, which may enable improved patient diagnostics and/or improved patient treatment.

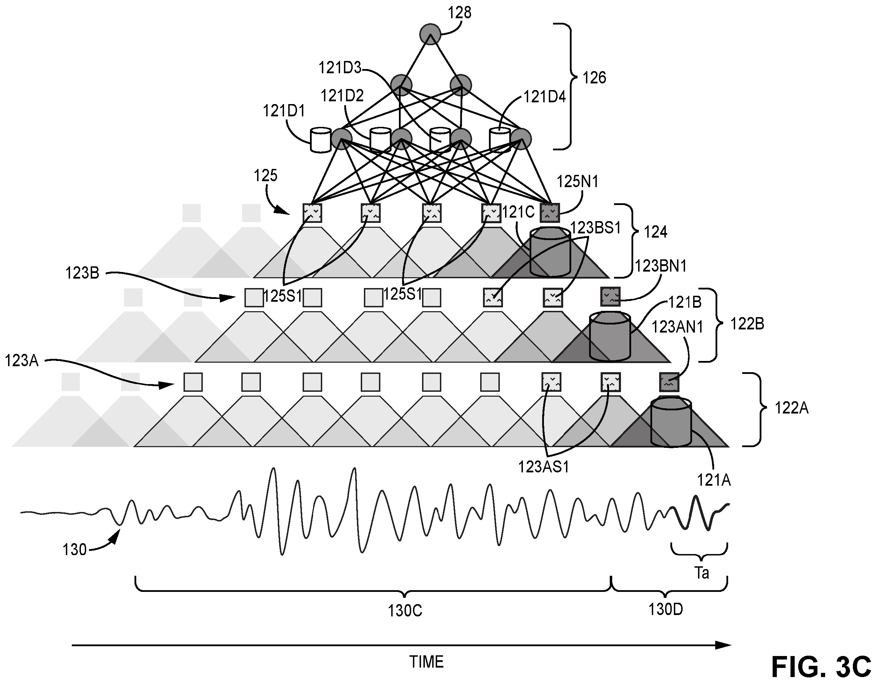

FIG. 3C, similar to FIGS. 3A-3B, is a conceptual diagram illustrating an example ML model 58C configured to generate an output 128 based applying a physiological signal 130 to ML model 58C. In some examples, ML model 58C determines intermediate kernel values to help reduce latency and/or memory requirements when applying physiological signal 130 to ML model 58 to generate an output 128 with respect to the physiological signal 130. Description of features of ML model 58 of FIGS. 3A and/or 3B, as described above, that are similar to features of ML model 58C can be referenced with respect to ML model 58C.

FIG. 3C conceptual diagrams illustrating an example ML model 58 configured to generate an output 128 based applying a physiological signal 130 to ML model 58. In some examples, processing circuitry 50 may generate an intermediate second hidden layer kernel 121B based on stored first hidden layer kernels 123AS1. In some examples, processing circuitry 50 may generate intermediate second hidden layer kernel 121B while generating first hidden layer kernel 123AN1 or before generating the first hidden layer kernel 123AN1. In some examples, processing circuitry 50 may generate intermediate second hidden layer kernel 121B in parallel with generating first hidden layer kernel 123AN1. In some examples, processing circuitry 50 may apply the first hidden layer kernel 123AN1 and intermediate second hidden layer kernel 121B to the second hidden layer 122B to generate second hidden layer kernel 123BN1. In some examples, in response to generating the first hidden layer kernel 123AN1, processing circuitry 50 may apply the first hidden layer kernel 123AN1 and intermediate second hidden layer kernel 121B to the second hidden layer 122B to generate second hidden layer kernel 123BN1.

In some examples, processing circuitry 50 may generate intermediate top layer kernel 121C based on stored second hidden layer kernels 123BS1. In some examples, processing circuitry 50 may apply the intermediate top layer kernel 121C and the second hidden layer kernel 123BN1 to generate top layer kernel 125N1. In some examples, processing circuitry 50 may generate intermediate top layer kernel 121C in parallel with generating second hidden layer kernel 123BN1. In some examples, processing circuitry 50 may generate intermediate top layer kernel 121C before generating second hidden layer kernel 123BN1.

In some examples, processing circuitry 50 may generate respective intermediate connected head nodes 121D1, 121D2, 121D3, 121D4 (cumulatively 121D) based on stored top layer kernels 125S1. In some examples, processing circuitry 50 may apply top layer kernel 125N1 and the respective intermediate connected head nodes 121D to generate a first layer of the connected head 126. In some examples, processing circuitry 50 may generate at least some of the connected head nodes 121D in parallel with generating top layer kernel 125N1. In some examples, processing circuitry 50 may generate at least some of the connected head nodes 121D before generating top layer kernel 125N1. In some examples, processing circuitry 50 may generate an intermediate first hidden layer kernel 121A based on a portion of physiological signal 130 saved to memory. In some examples, processing circuitry 50 may apply the intermediate first hidden layer kernel 121A and a portion of physiological signal 130, such as physiological signal 130 during time period Ta, to generate first hidden layer kernel 123AN1.

In some examples, ML model 58 may be waiting for physiological signal 130 to be sensed and applied to ML model 58 and may generate respective intermediate kernels and nodes (e.g., 121A, 121B, 121C, 121D) while waiting for physiological signal 130 to be sensed and applied to ML model 58.

In some examples, stimulation circuitry 57 may be configured to generate electrical stimulation therapy and processing circuitry 50 may be configured to adjust one or more parameters that define the electrical stimulation therapy 57 based, at least, on the generated output by ML model 58.

In some examples, by generating intermediate kernels based on stored kernels either in parallel with generating a generating kernel based on a newly sensed physiological signal 130 (e.g., physiological signal 130 sensed during time period Ta), latency of generating an output may be reduced which may improve an efficiency and/or speed an IMD 10 generates an output with respect to a particular diagnostic or therapeutic condition that is based on an output of a ML model with respect to a physiological signal.

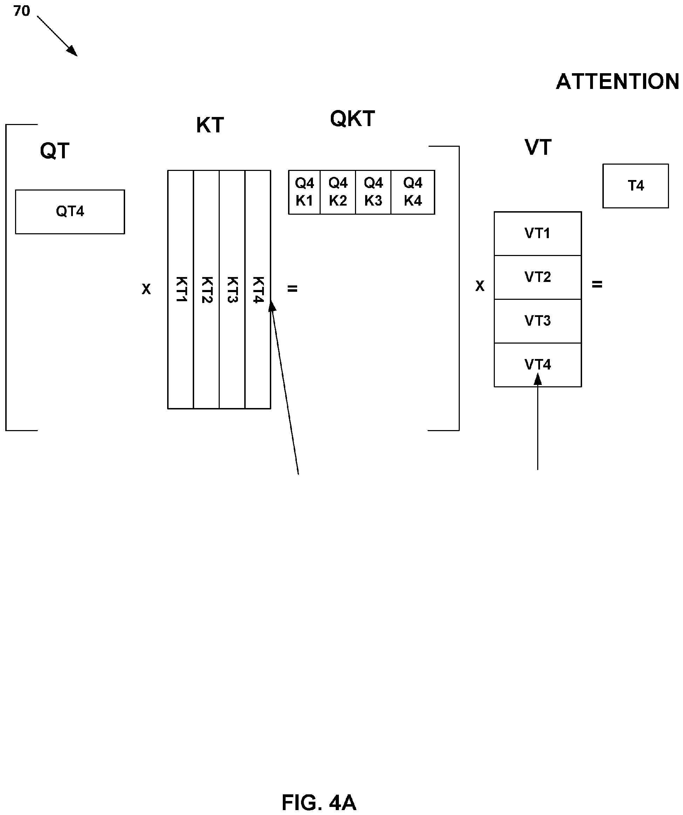

FIGS. 4A-4C illustrate conceptual diagrams of an attention head 70 configured to store a plurality of data elements, such as indicated by respective tokens, in a memory, such as storage device 56. In some examples, cache memory may be included in storage device. In some examples, the memory may be a temporary memory of ML model 58 that is positioned in a storage device 56 of IMD 10. In some examples, attention head 70 may be positioned at a similar position in ML model 58 where the connected head 126 is positioned with respect to ML model 58 as described with respect to FIGS. 3A-3C. In some examples, attention head 70 may have similar general functionality as connected head 126 with respect to generating an output 128 based on top layer tokens that are based on physiological signal 130.

In some examples, attention head may have a fixed key-value (KV) cache memory size, such as key token (KT) in FIGS. 4A-4C having a fixed size of four data elements (e.g., KT1, KT2, KT3, and KT4 as shown in FIG. 4A) and value token (VT) having a corresponding fixed size of four data elements (e.g., VT1, VT2, VT3, and VT4) as shown in FIG. 4A).

In some examples, a fixed key-value (KV) cache memory size in attention head 70 may be based on the model architecture of a ML model, such as ML model 58. For example, as shown in FIG. 4A, a KV cache memory size is four. However, a KV cache memory size for attention head 70 may be more than four or may be less than four.

In some examples, when a query token (QT) is issued, such as QT4, processing circuitry 50 indicates KT4 in the KT cache memory and computes a query key-token value of Q4K1, Q4K2, Q4K3, and Q4K4 and indicates value token (VT) 4 that corresponds to KT4 to multiply Q4K1, Q4K2, Q4K3, and Q4K4 with VT4 to compute token (T) 4.

In some examples, a QT may be based on an output of at least one of a plurality of top layer kernels 125, as shown in FIGS. 3A-3C. For example, an output of at least one of a plurality of top layer kernels 125 may be QT. In some examples, processing circuitry 50 may perform one or more transformations, such as a positional encoding transformation, on an output of at least one of a plurality of top layer kernels 125 to generate a QT.

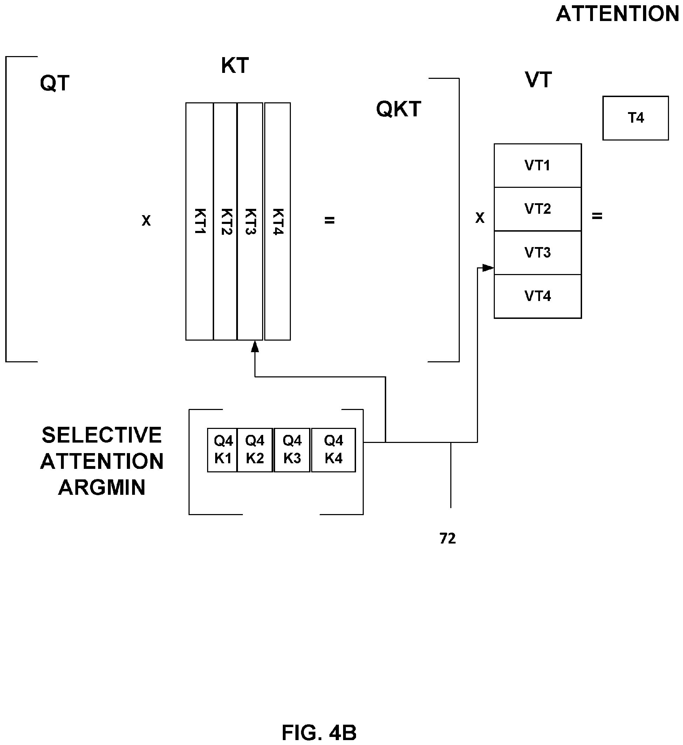

When an indication of a new data element is received by processing circuitry 50, such as data element 5 (not shown), processing circuitry 50 may determine which data element of the stored plurality of data elements is least attentive. In some examples, a data element being least attentive may include a data element being determined to be the least important data element of the stored plurality of data elements. For example, KT1 and VT1 corresponds to data element 1, KT2 and VT2 corresponds to data element 2, KT3 and VT3 corresponds to data element 3, and KT4 and VT4 corresponds to data element 4 (e.g., token 4). As shown in FIG. 4B, processing circuitry determines data element 3 is the least attentive data element of the four data elements. Processing circuitry 50 determines a position of the least attentive data element (e.g., data element 3) in the cache memory. For example, processing circuitry 50 determines KT3 is in the third position (from left to right in FIG. 4B) and VT3 is in the third position (from top to bottom in FIG. 4B). In response to determining the position of the least attentive data element, processing circuitry 50 selectively points 72 to the positions of the least attentive data element, such as data element 3 in FIG. 4B. For example, processing circuitry 50 selectively points 72 a position of KT3 to a position of VT3.

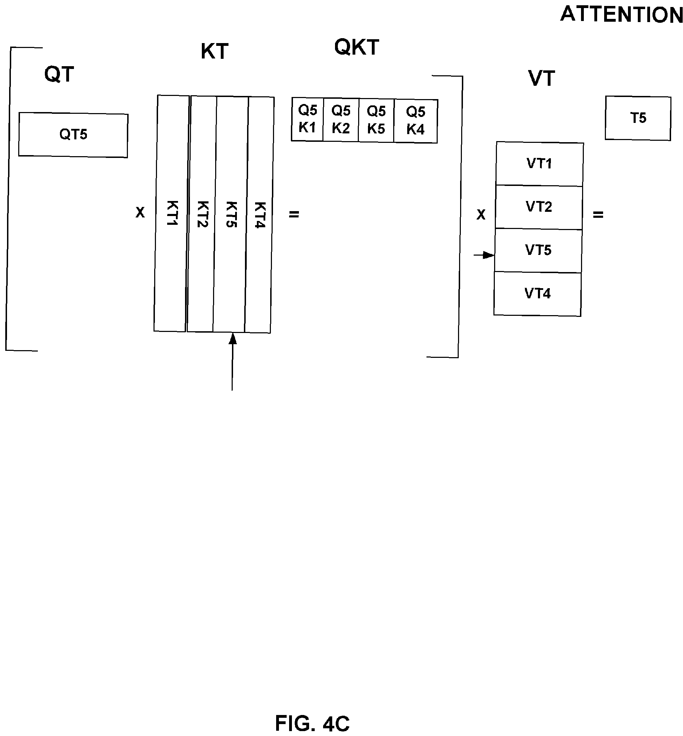

In some examples, as shown in FIG. 4C, processing circuitry 50 replaces (e.g., overwritten) data element 3 with new data element 5. For example, KT3 is replaced (e.g., overwritten) with KT5 at the position in which KT3 was positioned and VT3 is replaced (e.g., overwritten) with VT5 at the position in which VT3 was positioned. In some examples, by having a fixed cache memory size and selectively replacing the least attentive data elements, such as KTs and VTs, at particular positions in the cache memory by selectively pointing to where the replacement data elements should be positioned, attention head 70 may have a fixed cache memory while also having a variable attention receptive field. By overwriting the least attentive positions in place with new values, the persistent keys that are not overwritten do not need to be moved in memory, saving both power and latency.

FIG. 5 is a block diagram illustrating an example configuration of components of external device 12. In the example of FIG. 5, external device 12 includes processing circuitry 80, communication circuitry 82, storage device 84, and user interface 86.

Processing circuitry 80 may include one or more processors that are configured to implement functionality and/or process instructions for execution within external device 12. For example, processing circuitry 80 may be capable of processing instructions stored in storage device 84. Processing circuitry 80 may include, for example, microprocessors, DSPs, ASICs, FPGAs, or equivalent discrete or integrated logic circuitry, or a combination of any of the foregoing devices or circuitry. Accordingly, processing circuitry 80 may include any suitable structure, whether in hardware, software, firmware, or any combination thereof, to perform the functions ascribed herein to processing circuitry 80.

Communication circuitry 82 may include any suitable hardware, firmware, software or any combination thereof for communicating with another device, such as IMD 10. Under the control of processing circuitry 80, communication circuitry 82 may receive downlink telemetry from, as well as send uplink telemetry to, IMD 10, or another device. Communication circuitry 82 may be configured to transmit or receive signals via inductive coupling, electromagnetic coupling, Near Field Communication (NFC), Radio Frequency (RF) communication, Bluetooth, WiFi, or other proprietary or non-proprietary wireless communication schemes. Communication circuitry 82 may also be configured to communicate with devices other than IMD 10 via any of a variety of forms of wired and/or wireless communication and/or network protocols.

Storage device 84 may be configured to store information within external device 12 during operation. Storage device 84 may include a computer-readable storage medium or computer-readable storage device. In some examples, storage device 84 includes one or more of a short-term memory or a long-term memory. Storage device 84 may include, for example, RAM, DRAM, SRAM, magnetic discs, optical discs, flash memories, or forms of EPROM or EEPROM. In some examples, storage device 84 is used to store data indicative of instructions for execution by processing circuitry 80. Storage device 84 may be used by software or applications running on external device 12 to temporarily store information during program execution.

Data exchanged between external device 12 and IMD 10 may include operational parameters. External device 12 may transmit data including computer readable instructions which, when implemented by IMD 10, may control IMD 10 to change one or more operational parameters and/or export collected data. For example, processing circuitry 80 may transmit an instruction to IMD 10 which requests IMD 10 to export collected data (e.g., digitized physiological signals) to external device 12. In turn, external device 12 may receive the collected data from IMD 10 and store the collected data in storage device 84. In some examples, storage device 84 may store a ML model. Processing circuitry 80 may implement any of the techniques described herein to apply sensed physiological signal 130 to a ML model 58 to generate an output 128 with respect to the sensed physiological signal 130.

A user, such as a clinician or patient 4, may interact with external device 12 through user interface 86. User interface 86 includes a display (not shown), such as a liquid crystal display (LCD) or a light emitting diode (LED) display or other type of screen, with which processing circuitry 80 may present information related to IMD 10, e.g., cardiac EGMs. In addition, user interface 86 may include an input mechanism to receive input from the user. The input mechanisms may include, for example, any one or more of buttons, a keypad (e.g., an alphanumeric keypad), a peripheral pointing device, a touch screen, or another input mechanism that allows the user to navigate through user interfaces presented by processing circuitry 80 of external device 12 and provide input. In other examples, user interface 86 also includes audio circuitry for providing audible notifications, instructions or other sounds to the user, receiving voice commands from the user, or both.

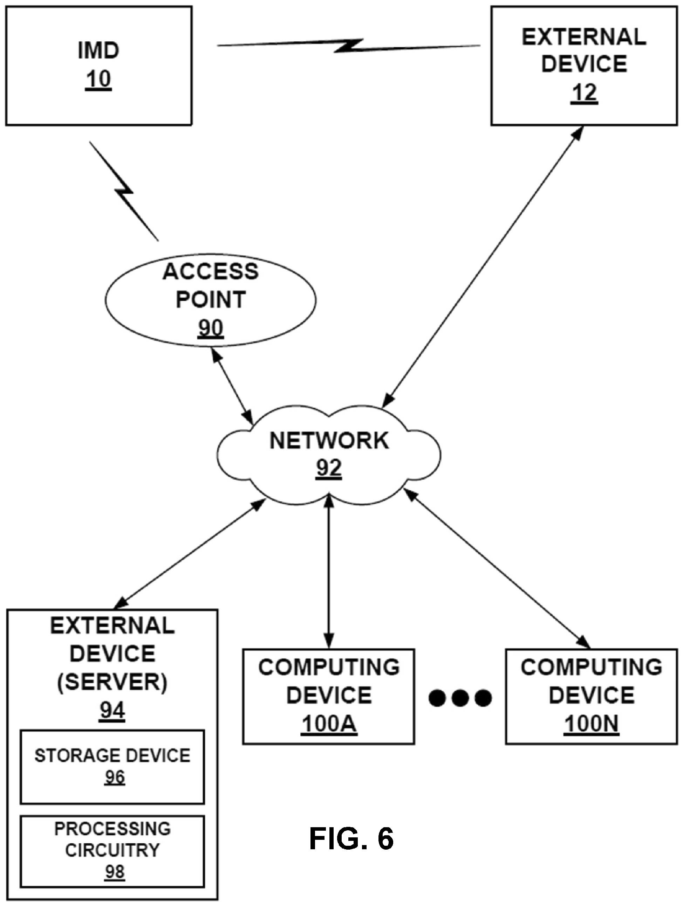

FIG. 6 is a block diagram illustrating an example system that includes an access point 90, a network 92, external computing devices, such as a server 94, and one or more other computing devices 100A-100N (collectively, "computing devices 100"), which may be coupled to IMD 10 and external device 12 via network 92, in accordance with one or more techniques described herein. In this example, IMD 10 may use communication circuitry 54 to communicate with external device 12 via a first wireless connection, and to communicate with an access point 90 via a second wireless connection. In the example of FIG. 6, access point 90, external device 12, server 94, and computing devices 100 are interconnected and may communicate with each other through network 92.

Access point 90 may include a device that connects to network 92 via any of a variety of connections, such as telephone dial-up, digital subscriber line (DSL), or cable modem connections. In other examples, access point 90 may be coupled to network 92 through different forms of connections, including wired or wireless connections. In some examples, access point 90 may be a user device, such as a tablet or smartphone, that may be co-located with the patient. IMD 10 may be configured to transmit data, such as physiological data, to access point 90. Access point 90 may then communicate the retrieved data to server 94 via network 92.

In some cases, server 94 may be configured to provide a secure storage site for data that has been collected from IMD 10 and/or external device 12. In some cases, server 94 may assemble data in web pages or other documents for viewing by trained professionals, such as clinicians, via computing devices 100. One or more aspects of the illustrated system of FIG. 6 may be implemented with general network technology and functionality, which may be similar to that provided by the Medtronic CareLink^{®} Network.

In some examples, one or more of computing devices 100 may be a tablet or other smart device located with a clinician, by which the clinician may program, receive alerts from, and/or interrogate IMD 10. For example, the clinician may access data collected by IMD 10 through a computing device 100, such as when patient 4 is in in between clinician visits, to check on a status of a medical condition. In some examples, the clinician may enter instructions for a medical intervention for patient 4 into an application executed by computing device 100, such as based on a status of a patient condition determined by IMD 10, external device 12, server 94. or any combination thereof, or based on other patient data known to the clinician. Device 100 then may transmit the instructions for medical intervention to another of computing devices 100 located with patient 4 or a caregiver of patient 4. For example, such instructions for medical intervention may include an instruction to change a drug dosage, timing, or selection, to schedule a visit with the clinician, or to seek medical attention. In further examples, a computing device 100 may generate an alert to patient 4 based on a status of a medical condition of patient 4, which may enable patient 4 proactively to seek medical attention prior to receiving instructions for a medical intervention. In this manner, patient 4 may be empowered to take action, as needed, to address his or her medical status, which may help improve clinical outcomes for patient 4.

In the example illustrated by FIG. 6, server 94 includes a storage device 96, e.g., to store data retrieved from IMD 10, and processing circuitry 98. Although not illustrated in FIG. 6 computing devices 100 may similarly include a storage device and processing circuitry. Processing circuitry 98 may include one or more processors that are configured to implement functionality and/or process instructions for execution within server 94. For example, processing circuitry 98 may be capable of processing instructions stored in storage device 96. Processing circuitry 98 may include, for example, microprocessors, DSPs, ASICs, FPGAs, or equivalent discrete or integrated logic circuitry, or a combination of any of the foregoing devices or circuitry. Accordingly, processing circuitry 98 may include any suitable structure, whether in hardware, software, firmware, or any combination thereof, to perform the functions ascribed herein to processing circuitry 98. Processing circuitry 98 of server 94 and/or the processing circuitry of computing devices 100 may implement any of the techniques described herein to apply sensed physiological signal 130 to a ML model 58 to generate an output 128 with respect to the sensed physiological signal 130.

Storage device 96 may include a computer-readable storage medium or computer-readable storage device. In some examples, storage device 96 includes one or more of a short-term memory or a long-term memory. Storage device 96 may include, for example, RAM, DRAM, SRAM, magnetic discs, optical discs, flash memories, or forms of EPROM or EEPROM. In some examples, storage device 96 is used to store data indicative of instructions for execution by processing circuitry 98.

Although the techniques for applying sensed physiological signal 130 to a ML model 58 to generate an output 128 with respect to the sensed physiological signal 130 is described as being performed by processing circuitry 50 of IMD 10, such techniques may be performed, in whole or part, by processing circuitry of any one or more devices of system 2, such as processing circuitry 80 of external device 12, processing circuitry 98 of server 94, or processing circuitry of one or more computing devices 100.

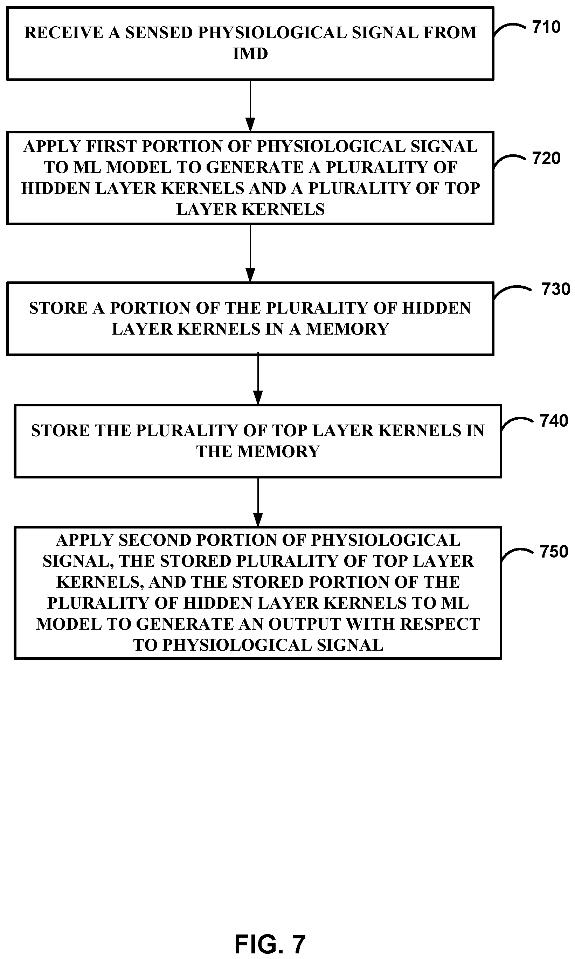

FIG. 7 is a flow diagram illustrating an example technique for a system as described herein. Processing circuitry 50 will be described for exemplary purposes, but other devices and/or systems, alone or in combination, described herein may perform this technique. As shown in the example of FIG. 7, processing circuitry 50 may be configured to receive physiological signal 130 from an IMD 10 (710). In some examples, the physiological signal 130 may include and/or be based on signal(s) sensed by one or more sensors or electrodes of IMD 10. The physiological signal 130 may include a first portion 130A and a second portion 130B, the second portion 130B being after the first portion 130A. Processing circuitry 50 may be configured to apply the first portion 130A of the physiological signal to ML model 58 to generate a plurality of hidden layer kernels 123A and/or 123B, and a plurality of top layer kernels 125 (720). In some examples, ML model 58 may be stored in storage device 56 of IMD 10.

Processing circuitry 50 may be configured to store a portion of the plurality of hidden layer kernels in a memory, such a storage device 56 (730). In some examples, the stored portion of the plurality of hidden layer kernels may correspond to at least one of stored first hidden layer kernels 123AS and/or stored second hidden layer kernels 123BN. Processing circuitry 50 may be configured to store the plurality of top layer kernels 125S in a memory, such a storage device 56

(740). Processing circuitry 50 may apply the second portion 130B of the physiological signal, the stored plurality of top layer kernels, and the stored portion of the plurality of hidden layer kernels to ML model 58 to generate an output 128 with respect to physiological signal 130 (750). In this manner, processing circuitry 50 can continuously update ML model 58 with updated kernels based on more recent sensed signals and then apply the updated kernels with a newly sensed signal to the ML model 58 for further analysis and additional output 128 based on the newly sensed signals.

In some examples, processing circuitry 50 may be configured to generate a health event detection and/or prediction based, at least in part, on the output of ML model 58. In some examples, stimulation circuitry 57 may be configured to generate electrical stimulation therapy and processing circuitry 50 may be configured to adjust one or more parameters that define the electrical stimulation therapy 57 based, at least, on the generated output by ML model 58.

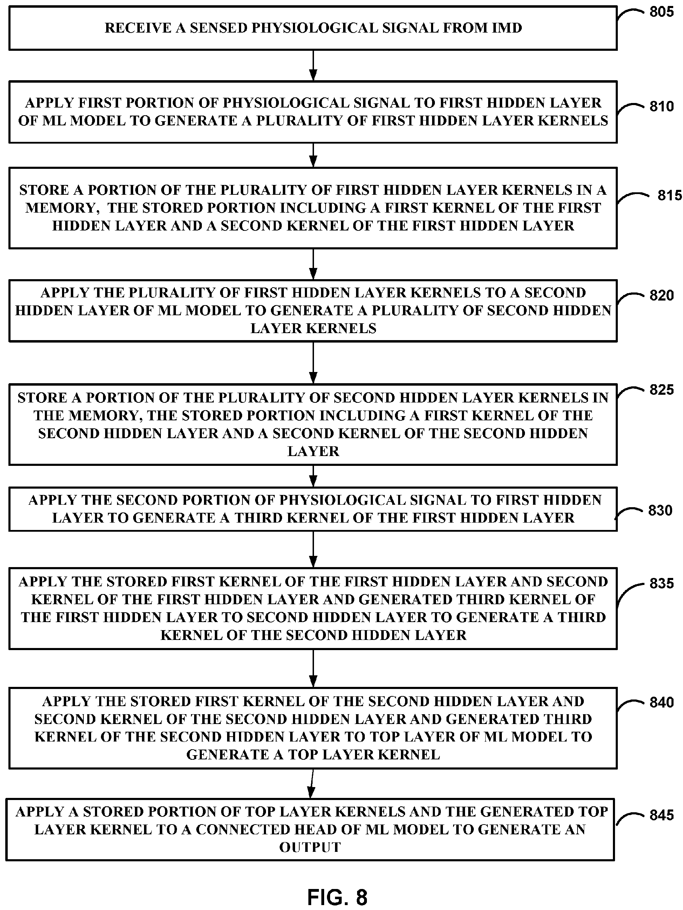

FIG. 8 is a flow diagram illustrating an example technique for a system as described herein. Processing circuitry 50 will be described for exemplary purposes, but other devices and/or systems, alone or in combination, described herein may perform this technique. As shown in the example of FIG. 8, processing circuitry 50 may be configured to receive physiological signal 130 from an IMD 10 (805). In some examples, the physiological signal 130 may include and/or be based on signal(s) sensed by one or more sensors or electrodes of IMD 10. The physiological signal 130 may include a first portion 130A and a second portion 130B, the second portion 130B being after the first portion 130A. Processing circuitry 50 may be configured to apply the first portion 130A of the physiological signal to a first hidden layer 122A of ML model 58 to generate a plurality of first hidden layer kernels 123A (810). In some examples, ML model 58 may be stored in storage device 56 of IMD 10.

Processing circuitry 50 may be configured to store a portion of the plurality of first hidden layer kernels 123AS in a memory, such a storage device 56 (815). In some examples the stored portion of the plurality of first hidden layer kernels 123A includes a first kernel 123AS of the first hidden layer 122A and a second kernel 123AS of the first hidden layer 122A. Processing circuitry 50 may be configured to apply the plurality of first hidden layer kernels 123A to a second hidden layer 122B of ML model 58 to generate a plurality of second hidden layer kernels 123B (820). Processing circuitry 50 may be configured to store a portion of the plurality of second hidden layer kernels 123BS in a memory, such a storage device 56 (825). In some examples the stored portion of the plurality of second hidden layer kernels 123B includes a first kernel 123BS of the second hidden layer 122B and a second kernel 123BS of the second hidden layer 122B.

Processing circuitry 50 may be configured to apply the second portion 130B of physiological signal to first hidden layer 122A to generate a third kernel 123AN of the first hidden layer 122A (830). Processing circuitry 50 may be configured to apply the stored first kernel and stored second kernel 123AS of the first hidden layer 122A and the generated third kernel 123AN of the first hidden layer 122A to second hidden layer 122B to generate a third kernel 123BN of the second hidden layer 122B (835).

Processing circuitry 50 may be configured to apply the stored first kernel and stored second kernel 123BS of the second hidden layer 122B and generated third kernel 123BN of the second hidden layer 122B to top layer 124 of ML model 58 to generate a top layer kernel 125N (840). Processing circuitry 50 may be configured to apply a stored portion of top layer kernels 125S and the generated top layer kernel 125N to a connected head 126 of ML model 58 to generate an output 128 with respect to physiological signal 130 (845).

In this manner, processing circuitry 50 can continuously update ML model 58 with the updated kernels based on more recent sensed signals and then apply the updated kernels with a newly sensed signal to the ML model 58 for further analysis and additional output 128 based on the newly sensed signals.

In some examples, processing circuitry 50 may be configured to generate a health event detection and/or prediction based, at least in part, on the output of ML model 58In some examples, stimulation circuitry 57 may be configured to generate electrical stimulation therapy and processing circuitry 50 may be configured to adjust one or more parameters that define the electrical stimulation therapy 57 based, at least, on the generated output by ML model 58.

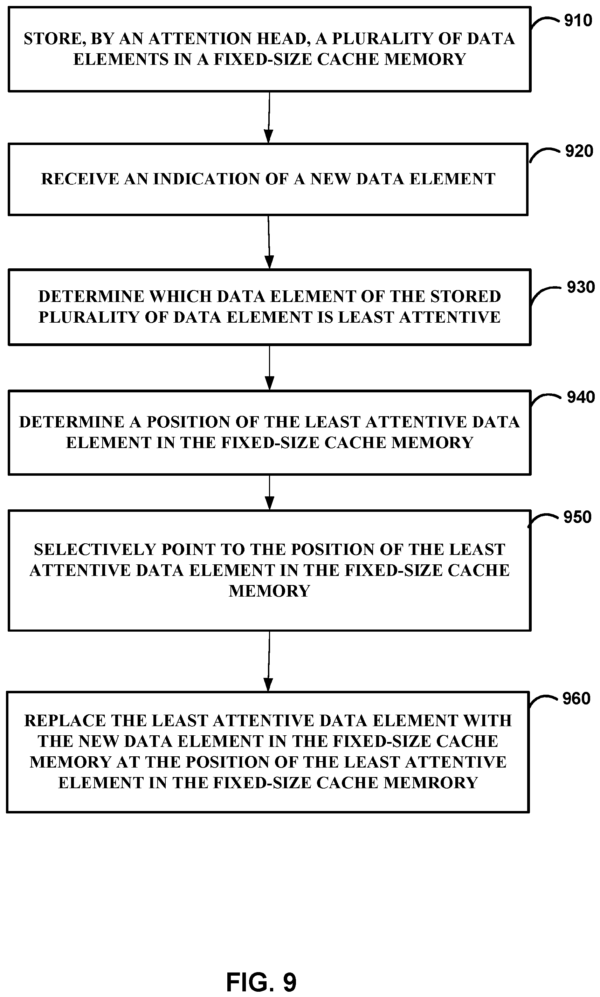

FIG. 9 is a flow diagram illustrating an example technique for a system as described herein. Processing circuitry 50 will be described for exemplary purposes, but other devices and/or systems, alone or in combination, described herein may perform this technique. As shown in the example of FIG. 9, processing circuitry 50 may be configured to store, by an attention head 70, a plurality of data elements in a fixed-size cache memory (910). In some examples, the fixed-size cache memory may be positioned in a storage device of IMD 10, such as storage device 56. Processing circuitry 50 may be configured to receive an indication of a new data element (920). Processing circuitry 50 may be configured to determine which data element of the stored plurality of data elements is least attentive (930). Processing circuitry 50 may be configured to determine a position of the least attentive data element in the fixed-size cache memory (940). For example, in FIGS. 4A-4C, processing circuitry 50 may determine data element 3 is the least attentive data element of the four data elements and determines a position of KT3 and VT3 in the fixed-size cache memory. Processing circuitry 50 may be configured to selectively point 72 to the position of the least attentive data element in the fixed-size cache memory (950). In some examples, processing circuitry 50 may determine a position of a KT of the least attentive element (e.g., KT3 in the example of FIG. 4B), determine a position of a VT of the least attentive element (e.g., VT3 in the example of FIG. 4B), and selectively point 72 the position of the KT of the least attentive element (e.g., KT3) in the fixed-size cache memory to the position of the value token of the least attentive element (e.g., VT3) in the fixed-size cache memory.

The following examples are illustrative of the techniques described herein.

Example 1A: A system includes a memory configured to store a machine learning (ML) model comprising a hidden layer and a top layer; and processing circuitry configured to receive a physiological signal comprising a first portion and a second portion, the second portion of the physiological signal occurring after the first portion of the physiological signal; apply the first portion of the physiological signal to the ML model to generate a plurality of hidden layer kernels and a plurality of top layer kernels; store a portion of the plurality of hidden layer kernels in the memory; store the plurality of top layer kernels in the memory; and apply the second portion of the physiological signal, the stored plurality of top layer kernels, and the stored portion of the plurality of hidden layer kernels to the ML model to generate an output with respect to at least the second portion of the physiological signal.

Example 2A: The system of example 1A, wherein the physiological signal is a continuously sensed physiological signal over a period of time, and the processing circuitry is further configured to: receive an updated portion of the continuously sensed physiological signal, the updated portion occurring after the received physiological signal; update the first portion and the second portion based on the update portion of the continuously sensed physiological signal; update the stored portion of the plurality of hidden layer kernels and the stored portion of the plurality of top layer kernels based on the updated first portion and the updated second portion; and apply the updated second portion, the updated stored plurality of top layer kernels, and the updated stored portion of the plurality of hidden layer kernels to the ML model to generate an updated output with respect to at least the updated portion of the continuously sensed physiological signal.

Example 3A: The system of example 2A, wherein a duration of a combination of the first portion of the physiological signal and the second portion of the physiological signal is based on a particular receptive field of the physiological signal.

Example 4A: The system of any of examples 1A-3A, wherein the processing circuitry is further configured to: store the first portion of the physiological signal in the memory; in response to applying the first portion of the physiological signal to the ML model to generate the plurality of hidden layer kernels and the plurality of top layer kernels, remove the first portion of the physiological signal from the memory; store the second portion of the physiological signal in the memory; and apply the stored second portion of the physiological signal, the stored plurality of top layer kernels, and the stored portion of the plurality of hidden layer kernels to the ML model to generate the output.

Example 5A: The system of any of examples 1A-4A, wherein the hidden layer is a first hidden layer, and the plurality of hidden layer kernels are a plurality of first hidden layer kernels, the ML model further comprises a second hidden layer that is directly above the first hidden layer, and an amount of the stored portion of the plurality of the first hidden layer kernels is based on a kernel input size of the second hidden layer.

Example 6A: The system of example 5A, wherein the amount of the stored portion of the plurality of the first hidden layer kernels is the kernel input size of the second hidden layer minus a stride of the second hidden layer.

Example 7A: The system of example 1A, wherein the hidden layer is a first hidden layer, the stored portion of the plurality of hidden layer kernels includes a stored first kernel and a stored second kernel, wherein the processing circuitry is further configured to: apply the second portion of the physiological signal to the hidden layer to generate a third kernel of the hidden layer; and apply the generated third kernel of the hidden layer, the stored first kernel, and the stored second kernel to the top layer to generate a kernel of the top layer.

Example 8A: The system of any of examples 1A-3A, wherein the hidden layer is a first hidden layer, the plurality of hidden layer kernels are a plurality of first hidden layer kernels, the stored portion of the plurality of first hidden layer kernels includes a stored first kernel of the first hidden layer and a stored second kernel of the first hidden layer, and the ML model further comprises a second hidden layer that is directly above the first hidden layer, wherein the processing circuitry is further configured to: apply the plurality of first hidden layer kernels to the second hidden layer to generate a plurality of second hidden layer kernels; store a portion of the plurality of second hidden layer kernels, the portion of the plurality of second hidden layer kernels including a first kernel of the second hidden layer and a second kernel of the second hidden layer; generate a third kernel of the first hidden layer based on applying the second portion of the physiological signal to the first hidden layer; apply the stored first kernel of the first hidden layer, the stored second kernel of the first hidden layer, and the generated third kernel of the first hidden layer to the second hidden layer to generate a third kernel of the second hidden layer; and apply the stored first kernel of the second hidden layer, the stored second kernel of the second hidden layer, and the generated third kernel of the second hidden layer to the top layer to generate a top layer kernel.

Example 9A: The system of any of examples 7A-8A, wherein the ML model further comprises a connected head, and the processing circuitry is further configured to apply the stored plurality of top layer kernels and the generated top layer kernel to the connected head to generate the output.

Example 10A: The system of any of examples 1A-3A, wherein the hidden layer is a first hidden layer, the plurality of hidden layer kernels are a plurality of first hidden layer kernels, the stored portion of the plurality of hidden layer kernels includes a stored first kernel and a stored second kernel, and the ML model further comprises a second hidden layer that is directly above the first hidden layer, wherein the processing circuitry is further configured to: generate an intermediate kernel of the second hidden layer based on the first kernel and the second kernel of the first hidden layer; generate a third kernel of the first hidden layer based on applying the second portion of the physiological signal to the first hidden layer; and generate a kernel of the second hidden layer based on the generated third kernel of the first hidden layer and the intermediate kernel of the second hidden layer.

Example 11A: The system of example 10A, wherein the processing circuitry is further configured to: generate the third kernel of the first hidden layer in parallel with the generation of the intermediate kernel of the second hidden layer.

Example 12A: The system of any of examples 1A-6A, wherein the ML model further comprises: an attention head configured to store a plurality of data elements in a fixed-size cache memory, and wherein the processing circuitry is further configured to: receive an indication of a new data element; determine which data element of the stored plurality of data elements is least attentive; determine a position of the least attentive data element in the fixed-size cache memory; selectively point to the position of the least attentive data element in the fixed-size cache memory; and replace the least attentive data element with the new data element in the fixed-size cache memory at the position of the least attentive data element in the fixed-size cache memory.

Example 13A: The system of example 12A, wherein the processing circuitry is further configured determine a position of a key token of the least attentive element in the fixed-size cache memory; determine a position of a value token of the least attentive element in the fixed-size cache memory; and selectively point the position of the key token of the least attentive element in the fixed-size cache memory to the position of the value token of the least attentive element in the fixed-size cache memory.

Example 14A: The system of any of examples 1A-13A, further includes control the IMD to deliver a therapy based, at least, on the output.

Example 15A: A method includes receiving, by processing circuitry, a physiological signal from an implantable medical device (IMD), the physiological signal comprising a first portion and a second portion, the second portion of the physiological signal occurring after the first portion of the physiological signal; applying, by the processing circuitry, the first portion of the physiological signal to a machine learning (ML) model to generate a plurality of hidden layer kernels and a plurality of top layer kernels, the ML model comprising a hidden layer and a top layer; storing, by the processing circuitry, a portion of the plurality of hidden layer kernels in a memory; storing, by the processing circuitry, the plurality of top layer kernels in the memory; and applying, by the processing circuitry, the second portion of the physiological signal, the stored plurality of top layer kernels, and the stored portion of the plurality of hidden layer kernels to the ML model to generate an output with respect to at least the second portion of the physiological signal.

Example 16A: The method of example 15A, wherein the physiological signal is a continuously sensed physiological signal over a period of time, the method further includes receiving, by the processing circuitry, an updated portion of the continuously sensed physiological signal, the updated portion occurring after the received physiological signal; updating, by the processing circuitry, the first portion and the second portion based on the update portion of the continuously sensed physiological signal; updating, by the processing circuitry, the stored portion of the plurality of hidden layer kernels and the stored portion of the plurality of top layer kernels based on the updated first portion and the updated second portion; and applying, by the processing circuitry, the updated second portion, the updated stored plurality of top layer kernels, and the updated stored portion of the plurality of hidden layer kernels to the ML model to generate an updated output with respect to at least the updated portion of the continuously sensed physiological signal.

Example 17A: The method of any of examples 15A-16A, further includes storing, by the processing circuitry, the first portion of the physiological signal in the memory; in response to applying the first portion of the physiological signal to the ML model to generate the plurality of hidden layer kernels and the plurality of top layer kernels, removing, by the processing circuitry, the first portion of the physiological signal from the memory; storing, by the processing circuitry, the second portion of the physiological signal in the memory; and applying, by the processing circuitry, the stored second portion of the physiological signal, the stored plurality of top layer kernels, and the stored portion of the plurality of hidden layer kernels to the ML model to generate the output.

Example 18A: The method of any of examples 15A-17A, wherein the hidden layer is a first hidden layer, the plurality of hidden layer kernels are a plurality of first hidden layer kernels, the stored portion of the plurality of first hidden layer kernels includes a stored first kernel of the first hidden layer and a stored second kernel of the first hidden layer, and the method further comprises: applying, by the processing circuitry, the second portion of the physiological signal to the hidden layer to generate a third kernel of the hidden layer; and applying, by the processing circuitry, the generated third kernel of the hidden layer, the stored first kernel, and the stored second kernel to the top layer to generate a kernel of the top layer.

Example 19A: The method of any of examples 15A-17A, wherein the hidden layer is a first hidden layer, the plurality of hidden layer kernels are a plurality of first hidden layer kernels, the stored portion of the plurality of first hidden layer kernels includes a stored first kernel of the first hidden layer and a stored second kernel of the first hidden layer, and the method further comprises: applying, by the processing circuitry, the plurality of first hidden layer kernels to a second hidden layer of the ML model to generate a plurality of second hidden layer kernels, the second hidden layer being positioned directly above the first hidden layer; storing, by the processing circuitry, a portion of the plurality of second hidden layer kernels, the portion of the plurality of second hidden layer kernels including a first kernel of the second hidden layer and a second kernel of the second hidden layer; generating, by the processing circuitry, a third kernel of the first hidden layer based on applying the second portion of the physiological signal to the first hidden layer; applying, by the processing circuitry, the stored first kernel of the first hidden layer, the stored second kernel of the first hidden layer, and the generated third kernel of the first hidden layer to the second hidden layer to generate a third kernel of the second hidden layer; and applying, by the processing circuitry, the stored first kernel of the second hidden layer, the stored second kernel of the second hidden layer, and the generated third kernel of the second hidden layer to the top layer to generate a top layer kernel.

Example 20A: The method of any of examples 15A-17A, wherein the hidden layer is a first hidden layer, the plurality of hidden layer kernels are a plurality of first hidden layer kernels, the stored portion of the plurality of first hidden layer kernels includes a stored first kernel of the first hidden layer and a stored second kernel of the first hidden layer, and the method further comprises: generating, by the processing circuitry, an intermediate kernel of a second hidden layer of the ML model based on the first kernel and the second kernel of the first hidden layer, the second hidden layer being positioned directly above the first hidden layer; generating, by the processing circuitry, a third kernel of the first hidden layer based on applying the second portion of the physiological signal to the first hidden layer; and generating, by the processing circuitry, a kernel of the second hidden layer based on the generated third kernel of the first hidden layer and the intermediate kernel of the second hidden layer.

Example 21A: The method of any of examples 15A-20A, wherein the ML model further comprises an attention head configured to store a plurality of data elements in a fixed-size cache memory, and the method further comprises: receiving, by the processing circuitry, an indication of a new data element; determining, by the processing circuitry, which data element of the stored plurality of data elements is least attentive; determining, by the processing circuitry, a position of the least attentive data element in the fixed-size cache memory; selectively, by the processing circuitry, pointing to the position of the least attentive data element in the fixed-size cache memory; and replacing, by the processing circuitry, the least attentive data element with the new data element in the fixed-size cache memory at the position of the least attentive data element in the fixed-size cache memory.

Example 22A: The method of example 21A, further includes determining, by the processing circuitry, a position of a key token of the least attentive element in the fixed-size cache memory; determining, by the processing circuitry, a position of a value token of the least attentive element in the fixed-size cache memory; and selectively pointing, by the processing circuitry, the position of the key token of the least attentive element in the fixed-size cache memory to the position of the value token of the least attentive element in the fixed-size cache memory.

Example 23A: A computer-readable medium comprising instructions that, when executed, causes processing circuitry of a medical system to perform the method of any of examples 15-22.

Example 1B: A system includes a memory configured to store a machine learning (ML) model includes receive a physiological signal comprising a first portion and a second portion, the second portion of the physiological signal occurring after the first portion of the physiological signal; apply the first portion of the physiological signal to the ML model to generate a plurality of hidden layer kernels and a plurality of top layer kernels; store a portion of the plurality of hidden layer kernels in the memory; store the plurality of top layer kernels in the memory; and apply the second portion of the physiological signal, the stored plurality of top layer kernels, and the stored portion of the plurality of hidden layer kernels to the ML model to generate an output with respect to at least the second portion of the physiological signal.

Example 2B: The system of example 1B, wherein the physiological signal is a continuously sensed physiological signal over a period of time.

Example 3B: The system of example 2B, wherein a duration of a combination of the first portion of the physiological signal and the second portion of the physiological signal is based on a particular receptive field of the physiological signal.

Example 4B: The system of any of examples 1B-3B, wherein the second portion of the physiological signal immediately follows the first portion of the physiological signal.

Example 5B: The system of any of examples 1B-4B, wherein a duration of the first portion of the physiological signal is a least two times greater than a duration of the second portion of the physiological signal.

Example 6B: The system of any of examples 1B-5B, wherein the processing circuitry is further configured to: store the first portion of the physiological signal in the memory; in response to applying the first portion of the physiological signal to the ML model to generate the plurality of hidden layer kernels and the plurality of top layer kernels, remove the first portion of the physiological signal from the memory; store the second portion of the physiological signal in the memory; and apply the stored second portion of the physiological signal, the stored plurality of top layer kernels, and the stored portion of the plurality of hidden layer kernels to the ML model to generate the output.

Example 7B: The system of any of examples 1B-6B, wherein the hidden layer is a first hidden layer, and the plurality of hidden layer kernels are a plurality of first hidden layer kernels, the ML model further comprises a second hidden layer that is directly above the first hidden layer, and an amount of the stored portion of the plurality of the first hidden layer kernels is based on a kernel input size of the second hidden layer.

Example 8B: The system of example 7B, wherein the amount of the stored portion of the plurality of the first hidden layer kernels is the kernel input size of the second hidden layer minus a stride of the second hidden layer.

Example 9B: The system of any of examples 1B-8B, wherein the ML model further comprises a connected head, and the processing circuitry is further configured to apply the top layer kernels to the connected head to generate the output.

Example 10B: The system of example 1B, wherein the hidden layer is a first hidden layer, the stored portion of the plurality of hidden layer kernels includes a stored first kernel and a stored second kernel, wherein the processing circuitry is further configured to: apply the second portion of the physiological signal to the hidden layer to generate a third kernel of the hidden layer; and apply the generated third kernel of the hidden layer, the stored first kernel, and the stored second kernel to the top layer to generate a kernel of the top layer.

Example 11B: The system of example 10B, wherein the ML model further comprises a connected head, and the processing circuitry is further configured to apply the stored plurality of top layer kernels and the generated kernel of the top layer to the connected head to generate the output.

Example 12B: The system of any of examples 1B-5B, wherein the hidden layer is a first hidden layer, the plurality of hidden layer kernels are a plurality of first hidden layer kernels, the stored portion of the plurality of first hidden layer kernels includes a stored first kernel of the first hidden layer and a stored second kernel of the first hidden layer, and the ML model further comprises a second hidden layer that is directly above the first hidden layer, wherein the processing circuitry is further configured to: apply the plurality of first hidden layer kernels to the second hidden layer to generate a plurality of second hidden layer kernels; store a portion of the plurality of second hidden layer kernels, the portion of the plurality of second hidden layer kernels including a first kernel of the second hidden layer and a second kernel of the second hidden layer; generate a third kernel of the first hidden layer based on applying the second portion of the physiological signal to the first hidden layer; apply the stored first kernel of the first hidden layer, the stored second kernel of the first hidden layer, and the generated third kernel of the first hidden layer to the second hidden layer to generate a third kernel of the second hidden layer; and apply the stored first kernel of the second hidden layer, the stored second kernel of the second hidden layer, and the generated third kernel of the second hidden layer to the top layer to generate a top layer kernel.

Example 13B: The system of example 12B, wherein the ML model further comprises a connected head, and the processing circuitry is further configured to apply the stored plurality of top layer kernels and the generated top layer kernel to the connected head to generate the output.

Example 14B: The system of any of examples 1B-5B, wherein the hidden layer is a first hidden layer, the plurality of hidden layer kernels are a plurality of first hidden layer kernels, the stored portion of the plurality of hidden layer kernels includes a stored first kernel and a stored second kernel, and the ML model further comprises a second hidden layer that is directly above the first hidden layer, wherein the processing circuitry is further configured to: generate an intermediate kernel of the second hidden layer based on the first kernel and the second kernel of the first hidden layer; generate a third kernel of the first hidden layer based on applying the second portion of the physiological signal to the first hidden layer; and generate a kernel of the second hidden layer based on the generated third kernel of the first hidden layer and the intermediate kernel of the second hidden layer.

Example 15B: The system of example 14B, wherein the processing circuitry is further configured to generate the third kernel of the first hidden layer in parallel with the generation of the intermediate kernel of the second hidden layer.

Example 16B: The system of any of examples 14B-15B, wherein the processing circuitry is further configured to apply the second portion of the physiological signal, the stored plurality of top layer kernels, and the stored portion of the plurality of hidden layer kernels to the ML model to generate the output with respect to the physiological signal.

Example 17B: The system of any of examples 1B-8B, wherein the ML model further comprises: an attention head configured to store a plurality of data elements in a fixed-size cache memory, and wherein the processing circuitry is further configured to: receive an indication of a new data element; determine which data element of the stored plurality of data elements is least attentive; determine a position of the least attentive data element in the fixed-size cache memory; selectively point to the position of the least attentive data element in the fixed-size cache memory; and replace the least attentive data element with the new data element in the fixed-size cache memory at the position of the least attentive data element in the fixed-size cache memory.

Example 18B: The system of example 17B, wherein the processing circuitry is further configured determine a position of a key token of the least attentive element in the fixed-size cache memory; determine a position of a value token of the least attentive element in the fixed-size cache memory; and selectively point the position of the key token of the least attentive element in the fixed-size cache memory to the position of the value token of the least attentive element in the fixed-size cache memory.

Example 19B: The system of any of examples 1B-18B, further comprising an implantable medical device (IMD) having a housing, wherein the memory and the processing circuitry are positioned in the housing of the IMD.

Example 20B: The system of example 19B, wherein the IMD further comprises at least one sensor configured to sense the physiological signal.

Example 21B: The system of example 20B, wherein the sensor includes at least one of a plurality of electrodes or an optical sensor.

Example 22B: A method includes receiving, by processing circuitry, a physiological signal from an implantable medical device (IMD), the physiological signal comprising a first portion and a second portion, the second portion of the physiological signal occurring after the first portion of the physiological signal; applying, by the processing circuitry, the first portion of the physiological signal to a machine learning (ML) model to generate a plurality of hidden layer kernels and a plurality of top layer kernels, the ML model comprising a hidden layer and a top layer; storing, by the processing circuitry, a portion of the plurality of hidden layer kernels in a memory; storing, by the processing circuitry, the plurality of top layer kernels in the memory; and applying, by the processing circuitry, the second portion of the physiological signal, the stored plurality of top layer kernels, and the stored portion of the plurality of hidden layer kernels to the ML model to generate an output with respect to at least the second portion of the physiological signal.

Example 23B: The method of example 22B, wherein the physiological signal is a continuously sensed physiological signal over a period of time.

Example 24B: The method of example 23B, wherein a duration of a combination of the first portion of the physiological signal and the second portion of the physiological signal is based on a particular receptive field of the physiological signal.

Example 25B: The method of any of examples 22B-24B, wherein the second portion of the physiological signal immediately follows the first portion of the physiological signal.

Example 26B: The method of any of examples 22B-25B, wherein a duration of the first portion of the physiological signal is a least two times greater than a duration of the second portion of the physiological signal.

Example 27B: The method of any of examples 22B-26B, further includes storing, by the processing circuitry, the first portion of the physiological signal in the memory; in response to applying the first portion of the physiological signal to the ML model to generate the plurality of hidden layer kernels and the plurality of top layer kernels, removing, by the processing circuitry, the first portion of the physiological signal from the memory; storing, by the processing circuitry, the second portion of the physiological signal in the memory; and applying, by the processing circuitry, the stored second portion of the physiological signal, the stored plurality of top layer kernels, and the stored portion of the plurality of hidden layer kernels to the ML model to generate the output.

Example 28B: The method of any of examples 22B-27B, wherein the hidden layer is a first hidden layer, and the plurality of hidden layer kernels are a plurality of first hidden layer kernels, the ML model further comprises a second hidden layer that is directly above the first hidden layer, and an amount of the stored portion of the plurality of the first hidden layer kernels is based on a kernel input size of the second hidden layer.

Example 29B: The method of example 28B, wherein the amount of the stored portion of the plurality of the first hidden layer kernels is the kernel input size of the second hidden layer minus a stride of the second hidden layer.

Example 30B: The method of any of examples 22B-29B, further includes applying, by the processing circuitry, the top layer kernels to a connected head of the ML model to generate the output.

Example 31B: The method of any of examples 22B-26B, wherein the hidden layer is a first hidden layer, the plurality of hidden layer kernels are a plurality of first hidden layer kernels, the stored portion of the plurality of first hidden layer kernels includes a stored first kernel of the first hidden layer and a stored second kernel of the first hidden layer, and the method further comprises: applying, by the processing circuitry, the second portion of the physiological signal to the hidden layer to generate a third kernel of the hidden layer; and applying, by the processing circuitry, the generated third kernel of the hidden layer, the stored first kernel, and the stored second kernel to the top layer to generate a kernel of the top layer.

Example 32B: The method of example 31B, further includes applying, by the processing circuitry, the stored plurality of top layer kernels and the generated kernel of the top layer to a connected head of the ML model to generate the output.

Example 33B: The method of any of examples 22B-26B, wherein the hidden layer is a first hidden layer, the plurality of hidden layer kernels are a plurality of first hidden layer kernels, the stored portion of the plurality of first hidden layer kernels includes a stored first kernel of the first hidden layer and a stored second kernel of the first hidden layer, and the method further comprises: applying, by the processing circuitry, the plurality of first hidden layer kernels to a second hidden layer of the ML model to generate a plurality of second hidden layer kernels, the second hidden layer being positioned directly above the first hidden layer; storing, by the processing circuitry, a portion of the plurality of second hidden layer kernels, the portion of the plurality of second hidden layer kernels including a first kernel of the second hidden layer and a second kernel of the second hidden layer; generating, by the processing circuitry, a third kernel of the first hidden layer based on applying the second portion of the physiological signal to the first hidden layer; applying, by the processing circuitry, the stored first kernel of the first hidden layer, the stored second kernel of the first hidden layer, and the generated third kernel of the first hidden layer to the second hidden layer to generate a third kernel of the second hidden layer; and applying, by the processing circuitry, the stored first kernel of the second hidden layer, the stored second kernel of the second hidden layer, and the generated third kernel of the second hidden layer to the top layer to generate a top layer kernel.

Example 34B: The method of example 33B, further includes applying, by the processing circuitry, the stored plurality of top layer kernels and the generated top layer kernel to a connected head of the ML model to generate the output.

Example 35B: The method of any of examples 22B-26B, wherein the hidden layer is a first hidden layer, the plurality of hidden layer kernels are a plurality of first hidden layer kernels, the stored portion of the plurality of first hidden layer kernels includes a stored first kernel of the first hidden layer and a stored second kernel of the first hidden layer, and the method further comprises: generating, by the processing circuitry, an intermediate kernel of a second hidden layer of the ML model based on the first kernel and the second kernel of the first hidden layer, the second hidden layer being positioned directly above the first hidden layer; generating, by the processing circuitry, a third kernel of the first hidden layer based on applying the second portion of the physiological signal to the first hidden layer; and generating, by the processing circuitry, a kernel of the second hidden layer based on the generated third kernel of the first hidden layer and the intermediate kernel of the second hidden layer.

Example 36B: The method of example 35B, further includes generating, by the processing circuitry, the third kernel of the first hidden layer in parallel with the generation of the intermediate kernel of the second hidden layer.

Example 37B: The method of any of examples 35B-36B, further includes applying, by the processing circuitry, the second portion of the physiological signal, the stored plurality of top layer kernels, and the stored portion of the plurality of hidden layer kernels to the ML model to generate the output with respect to the physiological signal.

Example 38B: The method of any of examples 22B-29B, wherein the ML model further comprises an attention head configured to store a plurality of data elements in a fixed-size cache memory, and the method further comprises: receiving, by the processing circuitry, an indication of a new data element; determining, by the processing circuitry, which data element of the stored plurality of data elements is least attentive; determining, by the processing circuitry, a position of the least attentive data element in the fixed-size cache memory; selectively, by the processing circuitry, pointing to the position of the least attentive data element in the fixed-size cache memory; and replacing, by the processing circuitry, the least attentive data element with the new data element in the fixed-size cache memory at the position of the least attentive data element in the fixed-size cache memory.

Example 39B: The method of example 38B, further includes determining, by the processing circuitry, a position of a key token of the least attentive element in the fixed-size cache memory; determining, by the processing circuitry, a position of a value token of the least attentive element in the fixed-size cache memory; and selectively pointing, by the processing circuitry, the position of the key token of the least attentive element in the fixed-size cache memory to the position of the value token of the least attentive element in the fixed-size cache memory.

Example 40B: A computer-readable medium comprising instructions that, when executed, causes processing circuitry of a medical system to perform the method of any of examples 22B-39B.

The techniques described in this disclosure may be implemented, at least in part, in hardware, software, firmware, or any combination thereof. For example, various aspects of the techniques may be implemented within one or more microprocessors, DSPs, ASICs, FPGAs, or any other equivalent integrated or discrete logic QRS circuitry, as well as any combinations of such components, embodied in external devices, such as physician or patient programmers, stimulators, or other devices. The terms "processor" and "processing circuitry" may generally refer to any of the foregoing logic circuitry, alone or in combination with other logic circuitry, or any other equivalent circuitry, and alone or in combination with other digital or analog circuitry.

For aspects implemented in software, at least some of the functionality ascribed to the systems and devices described in this disclosure may be embodied as instructions on a computer-readable storage medium such as RAM, DRAM, SRAM, magnetic discs, optical discs, flash memories, or forms of EPROM or EEPROM. The instructions may be executed to support one or more aspects of the functionality described in this disclosure.

In addition, in some aspects, the functionality described herein may be provided within dedicated hardware and/or software modules. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components. Also, the techniques could be fully implemented in one or more circuits or logic elements. The techniques of this disclosure may be implemented in a wide variety of devices or apparatuses, including an IMD, an external programmer, a combination of an IMD and external programmer, an integrated circuit (IC) or a set of ICs, and/or discrete electrical circuitry, residing in an IMD and/or external programmer.

Various examples have been described. These and other examples are within the scope of the following claims.

## Claims

1. A system comprising:
a memory configured to store a machine learning (ML) model comprising a hidden layer and a top layer; and
processing circuitry configured to:
receive a physiological signal comprising a first portion and a second portion, the second portion of the physiological signal occurring after the first portion of the physiological signal;
apply the first portion of the physiological signal to the ML model to generate a plurality of hidden layer kernels and a plurality of top layer kernels;
store a portion of the plurality of hidden layer kernels in the memory;
store the plurality of top layer kernels in the memory; and
apply the second portion of the physiological signal, the stored plurality of top layer kernels, and the stored portion of the plurality of hidden layer kernels to the ML model to generate an output with respect to at least the second portion of the physiological signal.

2. The system of claim 1, wherein the physiological signal is a continuously sensed physiological signal over a period of time, and the processing circuitry is further configured to:
receive an updated portion of the continuously sensed physiological signal, the updated portion occurring after the received physiological signal;
update the first portion and the second portion based on the update portion of the continuously sensed physiological signal;
update the stored portion of the plurality of hidden layer kernels and the stored portion of the plurality of top layer kernels based on the updated first portion and the updated second portion; and
apply the updated second portion, the updated stored plurality of top layer kernels, and the updated stored portion of the plurality of hidden layer kernels to the ML model to generate an updated output with respect to at least the updated portion of the continuously sensed physiological signal.

3. The system of claim 2, wherein a duration of a combination of the first portion of the physiological signal and the second portion of the physiological signal is based on a particular receptive field of the physiological signal.

4. The system of any of claims 1-3, wherein the processing circuitry is further configured to:
store the first portion of the physiological signal in the memory;
in response to applying the first portion of the physiological signal to the ML model to generate the plurality of hidden layer kernels and the plurality of top layer kernels, remove the first portion of the physiological signal from the memory;
store the second portion of the physiological signal in the memory; and
apply the stored second portion of the physiological signal, the stored plurality of top layer kernels, and the stored portion of the plurality of hidden layer kernels to the ML model to generate the output.

5. The system of any of claims 1-4, wherein the hidden layer is a first hidden layer, and the plurality of hidden layer kernels are a plurality of first hidden layer kernels,
the ML model further comprises a second hidden layer that is directly above the first hidden layer, and
an amount of the stored portion of the plurality of the first hidden layer kernels is based on a kernel input size of the second hidden layer.

6. The system of claim 5, wherein the amount of the stored portion of the plurality of the first hidden layer kernels is the kernel input size of the second hidden layer minus a stride of the second hidden layer.

7. The system of claim 1, wherein the hidden layer is a first hidden layer, the stored portion of the plurality of hidden layer kernels includes a stored first kernel and a stored second kernel, wherein the processing circuitry is further configured to:
apply the second portion of the physiological signal to the hidden layer to generate a third kernel of the hidden layer; and
apply the generated third kernel of the hidden layer, the stored first kernel, and the stored second kernel to the top layer to generate a kernel of the top layer.

8. The system of any of claims 1-3, wherein the hidden layer is a first hidden layer, the plurality of hidden layer kernels are a plurality of first hidden layer kernels, the stored portion of the plurality of first hidden layer kernels includes a stored first kernel of the first hidden layer and a stored second kernel of the first hidden layer, and the ML model further comprises a second hidden layer that is directly above the first hidden layer, wherein the processing circuitry is further configured to:
apply the plurality of first hidden layer kernels to the second hidden layer to generate a plurality of second hidden layer kernels;
store a portion of the plurality of second hidden layer kernels, the portion of the plurality of second hidden layer kernels including a first kernel of the second hidden layer and a second kernel of the second hidden layer;
generate a third kernel of the first hidden layer based on applying the second portion of the physiological signal to the first hidden layer;
apply the stored first kernel of the first hidden layer, the stored second kernel of the first hidden layer, and the generated third kernel of the first hidden layer to the second hidden layer to generate a third kernel of the second hidden layer; and
apply the stored first kernel of the second hidden layer, the stored second kernel of the second hidden layer, and the generated third kernel of the second hidden layer to the top layer to generate a top layer kernel.

9. The system of any of claims 7-8, wherein the ML model further comprises a connected head, and the processing circuitry is further configured to apply the stored plurality of top layer kernels and the generated top layer kernel to the connected head to generate the output.

10. The system of any of claims 1-3, wherein the hidden layer is a first hidden layer, the plurality of hidden layer kernels are a plurality of first hidden layer kernels, the stored portion of the plurality of hidden layer kernels includes a stored first kernel and a stored second kernel, and the ML model further comprises a second hidden layer that is directly above the first hidden layer, wherein the processing circuitry is further configured to:
generate an intermediate kernel of the second hidden layer based on the first kernel and the second kernel of the first hidden layer;
generate a third kernel of the first hidden layer based on applying the second portion of the physiological signal to the first hidden layer; and
generate a kernel of the second hidden layer based on the generated third kernel of the first hidden layer and the intermediate kernel of the second hidden layer.

11. The system of claim 10, wherein the processing circuitry is further configured to:
generate the third kernel of the first hidden layer in parallel with the generation of the intermediate kernel of the second hidden layer.

12. The system of any of claims 1-6, wherein the ML model further comprises:
an attention head configured to store a plurality of data elements in a fixed-size cache memory, and
wherein the processing circuitry is further configured to:
receive an indication of a new data element;
determine which data element of the stored plurality of data elements is least attentive;
determine a position of the least attentive data element in the fixed-size cache memory;
selectively point to the position of the least attentive data element in the fixed-size cache memory; and
replace the least attentive data element with the new data element in the fixed-size cache memory at the position of the least attentive data element in the fixed-size cache memory.

13. The system of claim 12, wherein the processing circuitry is further configured to:
determine a position of a key token of the least attentive element in the fixed-size cache memory;
determine a position of a value token of the least attentive element in the fixed-size cache memory; and
selectively point the position of the key token of the least attentive element in the fixed-size cache memory to the position of the value token of the least attentive element in the fixed-size cache memory.

14. The system of any of claims 1-13, further comprising an implantable medical device (IMD) having a housing, wherein the memory and the processing circuitry are positioned in the housing of the IMD, wherein the processing circuitry is further configured to:
control the IMD to deliver a therapy based, at least, on the output.

15. A computer readable medium comprising instructions that, when executed, causes the processing circuitry to perform the functions of any of claims 1 through 14.
